# EUROPEAN PATENT SPECIFICATION

(11) **EP 4 590 053 B1**
(45) Date of publication and mention of the grant of the patent: **11.11.2026**
(21) Application number: 23870218.7
(22) Date of filing: 06.09.2023
(51) Int. Cl.: H04L 5/00, H04B 7/024, H04W 72/1263, H04W 72/23, H04L 1/00

(54) **DATA SCHEDULING FOR COORDINATED TRANSMISSION WITH TERMINAL-FORWARDED SCHEDULING INFORMATION**
DATENPLANUNG FÜR KOORDINIERTE ÜBERTRAGUNG MIT VOM ENDGERÄT WEITERGELEITETEN PLANUNGSINFORMATIONEN
PLANIFICATION DE DONNÉES POUR TRANSMISSION COORDONNÉE AVEC INFORMATION D'ORDONNANCEMENT RELAYÉE PAR TERMINAL

(30) Priority: 30.09.2022 CN 202211215329; 04.07.2023 CN 202310816527
(43) Date of publication of application: 23.07.2025
(73) Proprietor: Huawei Technologies Co., Ltd., Shenzhen, Guangdong 518129 (CN)
(72) Inventor: WANG, Hanqing, Shenzhen, Guangdong 518129 (CN); WANG, Xiaohan, Shenzhen, Guangdong 518129 (CN); JIN, Huangping, Shenzhen, Guangdong 518129 (CN)
(74) Representative: Körber, Martin Hans
(86) International application number: PCT/CN2023/117212
(87) International publication number: WO 2024/066979

(56) References cited:
- CN-A- 109 392 152
- CN-A- 111 194 086
- CN-A- 112 399 566
- US-A1- 2014 192 734
- US-A1- 2022 116 962
- HUAWEI ET AL: "Enhancements on multi-TRP/panel transmission", no. #95, 3 November 2018 (2018-11-03), F-06921 SOPHIA-ANTIPOLIS CEDEX, pages 1 - 9, XP051478409, Retrieved from the Internet <URL:http://www.3gpp.org/ftp/tsg%5Fran/WG1%5FRL1/TSGR1%5F95/Docs/R1%2D1812243%2Ezip> [retrieved on 20181103]

## Description

### TECHNICAL FIELD

This application relates to the field of wireless communication technologies, and more specifically, to a data scheduling method and apparatus for coordinated transmission.

### BACKGROUND

In coherent joint transmission (coherent joint transmission, CJT), all network devices serving one terminal device jointly transmit same data to the terminal device through coordination. Data transmission performance of a communication system can be significantly improved through coordinated transmission. To ensure a coherent superposition effect, on the terminal device, of signals transmitted by a plurality of network devices participating in coordinated transmission, unified scheduling information between the network devices needs to be ensured. To be specific, different network devices schedule a same time-frequency resource for the terminal device, and use a same modulation and coding scheme (modulation and coding scheme, MCS) order and a same transport layer quantity. Therefore, the plurality of network devices participating in coordinated transmission need to exchange respective scheduling information through low-latency backhaul (backhaul, BH). In other words, ideal backhaul needs to be performed between the network devices, so that the plurality of network devices obtain the unified (unified) scheduling information through coordination.

As an IP (internet protocol) is used in a radio access network, the IP radio access network (IP radio access network, IPRAN) is widely used in the world. A technology of enabling CJT between network devices in an IPRAN networking scenario has attracted wide attention. However, backhaul between the network devices in the IPRAN networking scenario is non-ideal, and a backhaul link is characterized by a high latency. In other words, information exchange between network devices has a large interaction delay, and a requirement of a CJT technology for a low delay of the information exchange cannot be met. Therefore, how to implement CJT between coordinated network devices of non-ideal backhaul is an urgent problem to be resolved.

HUAWEI ET AL: "Enhancements on multi-TRP/panel transmission", 3GPP DRAFT; R1-1812243, no. #95 3 November 2018 (2018-11-03), pages 1-9, relates to enhancements on multi-transmission reception point/panel transmission.

US 2014192734 A1 relates to methods to support inter-eNodeB coordinated multi point (CoMP).

### SUMMARY

This application provides a data scheduling method and apparatus for coordinated transmission. A terminal device forwards scheduling information of a master network device to all coordinated network devices, to ensure unified scheduling information between all the coordinated network devices serving the terminal device, so as to implement CJT between coordinated devices of non-ideal backhaul.

The invention is defined by the appended claims.

According to a first aspect, an embodiment of this application provides a data scheduling method for coordinated transmission. The method may be performed by a terminal device or a component (for example, a chip or a chip system) of the terminal device. This is not limited in this application. The method includes: The terminal device receives first scheduling information from a first network device. The first scheduling information includes a first time-frequency resource, a first modulation and coding scheme MCS order, and a first transport layer quantity. The terminal device sends the first scheduling information. The terminal device receives N pieces of first downlink control information DCI from N network devices. Each of the N pieces of first DCI includes the first scheduling information. The terminal device transmits data with the N network devices on the first time-frequency resource. The first network device is a master network device, the N network devices include the first network device, and N is an integer greater than 1.

It should be noted that the N pieces of first DCI received by the terminal device correspond to the N network devices. To be specific, in addition to the first scheduling information, first DCI sent by any network device to the terminal device further includes other information, for example, redundancy version information or DCI format identifier information, of uplink data transmission or downlink data transmission scheduled by the network device for the terminal device. In other words, information other than the first scheduling information in any piece of first DCI is independently determined by a network device that sends the first DCI, without depending on another network device.

It should be noted that, in this embodiment of this application, coordinated transmission includes CJT and CJR.

Based on this solution, according to the data scheduling method for coordinated transmission provided in this embodiment of this application, the terminal device forwards scheduling information of the first network device, so that all network devices participating in coordinated transmission can implement coordinated transmission of coordinated devices of non-ideal backhaul based on same scheduling information.

With reference to the first aspect, in some implementations of the first aspect, that the terminal device receives first scheduling information from a first network device includes: The terminal device receives second DCI from the first network device. The second DCI includes the first scheduling information.

It should be noted that, in this embodiment of this application, the second DCI is DCI that is sent by the first network device to the terminal device and that carries the first scheduling information.

Based on this solution, the first scheduling information is sent based on the second DCI. This can be compatible with a solution in which DCI indicates scheduling information in a current communication system.

With reference to the first aspect, in some implementations of the first aspect, the second DCI includes first indication information, and the first indication information indicates that the first scheduling information is pre-scheduled scheduling information.

It should be noted that, in this embodiment of this application, that the first scheduling information sent by the first network device to the terminal device is pre-scheduled scheduling information means that the terminal device needs to forward the first scheduling information. Alternatively, the first indication information indicates the terminal device not to perform any processing on the received first scheduling information, or the like.

Optionally, the first indication information may be indication information carried in a redefined field in the second DCI.

With reference to the first aspect, in some implementations of the first aspect, the first indication information is a radio network temporary identifier RNTI, and the RNTI is used to scramble a cyclic redundancy check CRC code of the DCI.

Specifically, the first indication information may be a radio network temporary identifier (radio network temporary identifier, RNTI) used to scramble a cyclic redundancy check (cyclic redundancy check, CRC) code of the second DCI. To be specific, the CRC code of the second DCI is scrambled by using a specific RNTI. After detecting the second DCI corresponding to the CRC code scrambled by using the specific RNTI, the terminal device may learn that the first scheduling information carried in the DCI is pre-scheduled scheduling information.

Based on this solution, the first indication information indicates that the first scheduling information carried in the second DCI is scheduling information that needs to be forwarded, so that the terminal device can directly forward the first scheduling information based on the first indication information in the second DCI after receiving the second DCI, to ensure communication reliability.

With reference to the first aspect, in some implementations of the first aspect, the second DCI includes second indication information, and the second indication information indicates that the first scheduling information is scheduling information used for coherent joint transmission CJT or scheduling information used for coherent joint reception CJR.

Based on this solution, the second indication information in the second DCI indicates that initial scheduling information carried in the second DCI is scheduling information used for CJT or scheduling information used for CJR, so that after receiving the second DCI, the terminal device can perform coordinated transmission of CJT or CJR based on the second indication information in the second DCI, to ensure communication reliability.

With reference to the first aspect, in some implementations of the first aspect, that the terminal device sends the first scheduling information includes: The terminal device sends uplink control information UCI. The UCI includes the first scheduling information.

With reference to the first aspect, in some implementations of the first aspect, the UCI is carried on an uplink time-frequency resource, and the uplink time-frequency resource is a time-frequency resource scheduled in a static or semi-static manner.

It should be noted that the uplink time-frequency resource is a time-frequency resource scheduled for the terminal device in the static or semi-static manner by the N network devices participating in coordinated transmission.

With reference to the first aspect, in some implementations of the first aspect, in a time division duplex TDD system, a frequency band of the uplink time-frequency resource is located in a second frequency band, the second frequency band is a frequency band that does not overlap a first frequency band, and the first frequency band is a frequency band that carries the first DCI.

With reference to the first aspect, in some implementations of the first aspect, the second frequency band is a supplementary uplink SUL frequency band.

With reference to the first aspect, in some implementations of the first aspect, in a frequency division duplex FDD system, a frequency band of the uplink time-frequency resource is located in a second frequency band, a frequency band of a downlink time-frequency resource of the first DCI is located in a first frequency band, and the second frequency band is an uplink frequency band corresponding to the first frequency band.

With reference to the first aspect, in some implementations of the first aspect, the UCI further includes one of new data indication information and hybrid automatic repeat request-acknowledgment HARQ-ACK resource indication information, the new data indication information indicates whether transmission data scheduled based on scheduling information of the coordinated transmission is initially transmitted data or non-initially transmitted data, and the HARQ-ACK resource indication information indicates a time-frequency resource for transmitting acknowledgment feedback information.

Based on this solution, UCI that carries the scheduling information of the coordinated transmission is transmitted on an uplink resource scheduled by the N network devices for the terminal device in the static or semi-static manner, so that no additional interaction delay needs to be introduced during allocation of the uplink resource, to improve communication efficiency.

With reference to the first aspect, in some implementations of the first aspect, the first scheduling information is carried in a response message, and the response message is a response message of full radio resource control RRC signaling or a response message of media access control control element MAC-CE signaling.

With reference to the first aspect, in some implementations of the first aspect, the first scheduling information is carried on a time-frequency resource of a physical uplink shared channel PUSCH.

With reference to the first aspect, in some implementations of the first aspect, the method further includes: The terminal device receives indication information of first time from the first network device. The indication information of the first time indicates a time interval between time at which the terminal device sends the first scheduling information and time at which the terminal device receives the N pieces of first DCI from the N network devices. The terminal device sends the indication information of the first time.

Based on the foregoing solution, data is transmitted between the network device and the terminal device after a time interval of the first time, so that data synchronization between network devices participating in coordinated transmission can be ensured, and system performance and reliability are improved.

With reference to the first aspect, in some implementations of the first aspect, that the terminal device receives first scheduling information from a first network device includes: The terminal device receives the first scheduling information from the first network device when transmission of second scheduling information fails. The second scheduling information includes a second time-frequency resource, a second MCS order, and a second transport layer quantity, and the second scheduling information is pre-scheduled scheduling information.

It should be noted that, in this embodiment of this application, the pre-scheduled scheduling information means that the terminal device needs to forward the second scheduling information. Alternatively, the terminal device does not perform any processing on the received second scheduling information. In other words, the terminal device does not transmit data on a time-frequency resource, or the like in the pre-scheduled scheduling information.

Based on this solution, when scheduling fails, the first network device may initiate a re-scheduling process, to ensure scheduling reliability, and ensure system stability.

With reference to the first aspect, in some implementations of the first aspect, the second scheduling information is the same as the first scheduling information.

With reference to the first aspect, in some implementations of the first aspect, that the terminal device transmits data with the N network devices on the first time-frequency resource includes: When the first scheduling information is used for CJT, the terminal device receives, on the first time-frequency resource, same downlink data sent by the N network devices; or the terminal device sends uplink data on the first time-frequency resource when the first scheduling information is used for CJR.

Based on the foregoing solution, the data scheduling method for coordinated transmission provided in this embodiment of this application is not only applicable to downlink data transmission, for example, CJT between network devices in a non-ideal backhaul scenario. In addition, this method is also applicable to uplink data transmission, for example, CJR between a plurality of network devices in a non-ideal backhaul scenario.

With reference to the first aspect, in some implementations of the first aspect, the first network device is a master network device, and a network device other than the first network device in the N network devices is a slave network device.

According to a second aspect, an embodiment of this application provides a data scheduling method for coordinated transmission. The method may be performed by a network device or a component (for example, a chip or a chip system) of the network device. This is not limited in this application. The method includes: A first network device sends first scheduling information to a terminal device. The first scheduling information includes a first time-frequency resource, a first modulation and coding scheme MCS order, and a first transport layer quantity. The first network device receives the first scheduling information from the terminal device after the first network device sends the first scheduling information to the terminal device. The first network device sends first downlink control information DCI to the terminal device. The first DCI includes the first scheduling information. The first network device transmits data with the terminal device on the first time-frequency resource.

It should be noted that in addition to the first scheduling information, the first DCI sent by the first network device to the terminal device further includes other information, for example, redundancy version information or DCI format identifier information, of uplink data transmission or downlink data transmission scheduled by the first network device for the terminal device.

In addition, in this embodiment of this application, coordinated transmission includes CJT and CJR.

Based on this solution, according to the data scheduling method for coordinated transmission provided in this embodiment of this application, the terminal device forwards scheduling information of the first network device, so that all network devices participating in coordinated transmission can implement coordinated transmission of coordinated devices of non-ideal backhaul based on same scheduling information.

With reference to the second aspect, in some implementations of the second aspect, that a first network device sends first scheduling information to a terminal device includes: The first network device sends second DCI to the terminal device. The second DCI includes the first scheduling information.

With reference to the second aspect, in some implementations of the second aspect, the second DCI includes first indication information, and the first indication information indicates that the first scheduling information is scheduling information pre-scheduled by the first network device.

It should be noted that, in this embodiment of this application, the second DCI is DCI that is sent by the first network device to the terminal device and that carries the first scheduling information.

In addition, in this embodiment of this application, that the first scheduling information is scheduling information pre-scheduled by the first network device means that the terminal device needs to forward the first scheduling information. Alternatively, the first indication information indicates the terminal device not to perform any processing on the received first scheduling information, or the like.

Optionally, the first indication information may be indication information carried in a redefined field in the second DCI.

With reference to the second aspect, in some implementations of the second aspect, the first indication information is a radio network temporary identifier RNTI, and the RNTI is used to scramble a cyclic redundancy check CRC code of the second DCI.

Specifically, the first indication information may be an RNTI used to scramble a CRC code of the second DCI. To be specific, the CRC code of the second DCI is scrambled by using a specific RNTI. After detecting the second DCI corresponding to the CRC code scrambled by using the specific RNTI, the terminal device may learn that information carried in the second DCI includes the first scheduling information.

With reference to the second aspect, in some implementations of the second aspect, the second DCI includes second indication information, and the second indication information indicates that the first scheduling information is scheduling information used for coherent j oint transmission CJT or scheduling information used for coherent joint reception CJR.

With reference to the second aspect, in some implementations of the second aspect, that the first network device receives the first scheduling information from the terminal device includes: The first network device receives uplink control information UCI from the terminal device. The UCI includes the first scheduling information.

With reference to the second aspect, in some implementations of the second aspect, the UCI is carried on an uplink time-frequency resource, and the uplink time-frequency resource is a time-frequency resource scheduled by the first network device for the terminal device in a static or semi-static manner.

It should be noted that the uplink time-frequency resource is a time-frequency resource scheduled by the first network device for the terminal device in the static or semi-static manner.

With reference to the second aspect, in some implementations of the second aspect, in a time division duplex TDD system, a frequency band of the uplink time-frequency resource is located in a second frequency band, the second frequency band is a frequency band that does not overlap a first frequency band, and the first frequency band is a frequency band that carries the first DCI.

With reference to the second aspect, in some implementations of the second aspect, the second frequency band is a supplementary uplink SUL frequency band.

With reference to the second aspect, in some implementations of the second aspect, in a frequency division duplex FDD system, a frequency band of the uplink time-frequency resource is located in a second frequency band, a frequency band of a downlink time-frequency resource of the first DCI is located in a first frequency band, and the second frequency band is an uplink frequency band corresponding to the first frequency band.

With reference to the second aspect, in some implementations of the second aspect, the UCI further includes one of new data indication information and hybrid automatic repeat request-acknowledgment HARQ-ACK resource indication information, the new data indication information indicates whether transmission data scheduled based on scheduling information of the coordinated transmission is initially transmitted data or non-initially transmitted data, and the HARQ-ACK resource indication information indicates a time-frequency resource for transmitting acknowledgment feedback information.

With reference to the second aspect, in some implementations of the second aspect, the first scheduling information is carried in a response message, and the response message is a response message of full radio resource control RRC signaling or a response message of media access control-control element MAC-CE signaling.

With reference to the second aspect, in some implementations of the second aspect, the first scheduling information is carried on a time-frequency resource of a physical uplink shared channel PUSCH.

With reference to the second aspect, in some implementations of the second aspect, the method further includes: The first network device sends indication information of first time to the terminal device. The indication information of the first time indicates a time interval between time at which the first network device receives the first scheduling information and time at which the first network device sends the first DCI to the terminal device. The first network device receives the indication information of the first time from the terminal device after the first network device sends the indication information of the first time to the terminal device.

With reference to the second aspect, in some implementations of the second aspect, that a first network device sends first scheduling information to a terminal device includes: The first network device sends the first scheduling information to the terminal device when transmission of second scheduling information fails. The second scheduling information includes a second time-frequency resource, a second MCS order, and a second transport layer quantity, and the second scheduling information is pre-scheduled scheduling information.

With reference to the second aspect, in some implementations of the second aspect, a time interval between time at which the first network device sends the second scheduling information and time at which the first network device sends the first scheduling information is second time.

Based on this solution, the second time is set, so that scheduling reliability of the first network device can be ensured, and system performance and reliability can be improved.

With reference to the second aspect, in some implementations of the second aspect, the second scheduling information is the same as the first scheduling information.

With reference to the second aspect, in some implementations of the second aspect, that the first network device transmits data with the terminal device on the first time-frequency resource includes: The first network device sends downlink data to the terminal device on the first time-frequency resource when the first scheduling information is used for CJT; or the first network device receives uplink data from the terminal device on the first time-frequency resource when the first scheduling information is used for CJR.

With reference to the second aspect, in some implementations of the second aspect, the first network device is a master network device, the first network device is one of N network devices, and a network device other than the first network device in the N network devices is a slave network device.

According to a fifth aspect, an embodiment of this application provides a data scheduling apparatus for coordinated transmission. The apparatus is configured to perform the method provided in the first aspect. Specifically, the apparatus may include a unit and/or a module configured to perform the method provided in any one of the first aspect or the foregoing implementations of the first aspect, for example, a processing unit and an obtaining unit.

In an implementation, the data scheduling apparatus for coordinated transmission is a terminal device. The obtaining unit may be a transceiver or an input/output interface, and the processing unit may be at least one processor. Optionally, the transceiver may be a transceiver circuit. Optionally, the input/output interface may be an input/output circuit.

In another implementation, an apparatus for the data scheduling method for coordinated transmission is a chip, a chip system, or a circuit in the terminal device. The obtaining unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, an embodiment of this application provides a data scheduling apparatus for coordinated transmission. The apparatus is configured to perform the method provided in the second aspect. Specifically, the apparatus may include a unit and/or a module configured to perform the method provided in any one of the second aspect or the foregoing implementations of the second aspect, for example, a processing unit and an obtaining unit.

**In** an implementation, the data scheduling apparatus for coordinated transmission is a network device. The obtaining unit may be a transceiver or an input/output interface, and the processing unit may be at least one processor. Optionally, the transceiver may be a transceiver circuit. Optionally, the input/output interface may be an input/output circuit.

**In** another implementation, the data scheduling apparatus for coordinated transmission is a chip, a chip system, or a circuit in the network device. The obtaining unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a ninth aspect, an embodiment of this application provides a computer-readable storage medium. The computer-readable storage medium stores program code executed by a device, and the program code is used to perform the method provided in any one of the first aspect or the second aspect.

According to a tenth aspect, an embodiment of this application provides a computer program product including instructions. When the computer program product runs on a computer, the computer is enabled to perform the method provided in any one of the first aspect or the second aspect.

### BRIEF DESCRIPTION OF DRAWINGS

FIG. 1 is a diagram of an architecture of a communication system 100 applicable to embodiments of this application;
FIG. 2 is a schematic flowchart of a data scheduling method 200 for coordinated transmission according to an embodiment of this application;
FIG. 3 is a schematic flowchart of another data scheduling method 300 for coordinated transmission according to an embodiment of this application;
FIG. 4 is a diagram of an interaction delay comparison result between a first data scheduling method for coordinated transmission and a scheduling manner of coordinated transmission performed based on BH interaction according to an embodiment of this application;
FIG. 5 is a schematic block diagram of a data scheduling apparatus 500 for coordinated transmission according to an embodiment of this application;
FIG. 6 is a diagram of a structure of another data scheduling apparatus for coordinated transmission according to an embodiment of this application;
FIG. 7 is a diagram of a structure of a network device according to an embodiment of this application;
FIG. 8 is a diagram of a structure of a terminal device according to an embodiment of this application;
FIG. 9 is a diagram of an interaction delay comparison result between a second data scheduling method for coordinated transmission and a scheduling manner of coordinated transmission performed based on BH interaction according to an embodiment of this application;
FIG. 10 is a diagram of an interaction delay comparison result between a third data scheduling method for coordinated transmission and a scheduling manner of coordinated transmission performed based on BH interaction according to an embodiment of this application; and
FIG. 11 is a diagram in which a terminal device preferentially sends UCI on an SUL frequency band.

### DESCRIPTION OF EMBODIMENTS

Technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a wireless fidelity (wireless fidelity, Wi-Fi) system, a communication system related to a 3rd generation partnership project (3rd generation partnership project, 3GPP), and another communication system (for example, a 6G system) or a plurality of communication convergence systems that may appear in the future.

In embodiments of this application, a terminal device is a device having a wireless transceiver function. For example, the terminal device may include a handheld device having a wireless connection function, or a processing device connected to a wireless modem. The terminal device may communicate with a core network through a radio access network RAN, and exchange voice and/or data with the RAN. The terminal device may be user equipment (user equipment, UE), a wireless terminal device, a mobile terminal device, a device-to-device (device-to-device, D2D) communication terminal device, a V2X terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal device may further include a mobile phone (or referred to as a "cellular" phone), a computer having a mobile terminal device, a portable, pocket-sized, handheld, or computer built-in mobile apparatus, or the like, for example, a device such as a personal communication service (personal communication service, PCS) phone. In addition, the terminal device may alternatively be a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. The terminal device may be fixed or mobile.

It should be noted that, in this application, an apparatus configured to implement a function of the terminal device may be a terminal device, or may be an apparatus that can support the terminal device to implement the function, for example, a chip system. The apparatus may be installed in the terminal device. In this application, the chip system may include a chip, or may include a chip and another discrete component.

A network device in embodiments of this application is an access device that is in a mobile communication system and that is accessed by the terminal device in a wireless manner, and includes a radio access network device, for example, a base station. The network device may alternatively be a device that communicates with the terminal device over an air interface. The network device may include an evolved NodeB (evolved NodeB) (which may be referred to as an eNB or an e-NodeB for short) in a long term evolution (long term evolution, LTE) system or long term evolution-advanced (long term evolution-advanced, LTE-A). The eNB is an apparatus that is deployed in a radio access network, that meets a fourth generation (fourth generation, 4G) mobile communication technology standard, and that provides a wireless communication function for the terminal device. The network device may alternatively be a new radio controller (new radio controller, NR controller), may be a gNodeB (gNodeB, gNB) in a 5G system, may be a centralized network element (central unit), may be a new radio base station, may be a remote radio unit, may be a micro base station (also referred to as a small cell), may be a relay (relay), may be a distributed network element (distributed unit), may be a macro base station in various forms, or may be a transmission reception point (transmission reception point, TRP), a reception point (reception point, RP), a transmission measurement function (transmission measurement function, TMF), a transmission point (transmission point, TP), or any other radio access device. Embodiments of this application are not limited thereto. The network device may further include a home NodeB (for example, a home evolved NodeB, or a home NodeB, HNB), a baseband unit (baseband unit, BBU), a wireless fidelity (wireless fidelity, Wi-Fi) access point (access point, AP), or the like. A specific technology and a specific device form that are used for the network device are not limited in embodiments of this application. The network device may correspond to the eNB in the 4G system, and correspond to the gNB in the 5G system.

The base station in embodiments of this application may include a central unit (central unit, CU) and a distributed unit (distributed unit, DU), and a plurality of DUs may be centrally controlled by one CU. The CU and the DU may be obtained through division based on functions of protocol layers of a wireless network that are of the CU and the DU. For example, functions of a PDCP layer and a protocol layer above the PDCP layer are set on the CU, and functions of protocol layers below the PDCP layer such as a radio link control (radio link control, RLC) layer and a media access control (media access control, MAC) layer are set on the DU. It should be noted that such division into protocol layers is merely an example, and may be other division into protocol layers. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, and the entities are respectively a control-plane CU entity (CU-CP entity) and a user-plane CU entity (CU-UP entity). In a network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

In embodiments of this application, the terminal device is connected to a radio access network device in a wireless manner, and the radio access network device is connected to a core network device in a wireless or wired manner. The core network device and the radio access network device may be independent different physical devices, a function of the core network device and a logical function of the radio access network device may be integrated into a same physical device, or some functions of the core network device and some functions of the radio access network device may be integrated into one physical device. The terminal device may be stationary, or may be mobile.

For ease of understanding of embodiments of this application, several terms in this application are first briefly described.
1. CJT: A plurality of network devices transmit data to one terminal device in a coherent transmission manner. All the plurality of network devices participating in coherent transmission obtain related data information (for example, data stream information or a precoding matrix) and channel state information (channel state information, CSI) between the terminal device and the plurality of network devices (for example, a covariance matrix of channels between the terminal device and the plurality of network devices). The plurality of network devices may be equivalent to a plurality of distributed antenna arrays, and jointly precode to-be-transmitted data at a same layer. The "coherent transmission" means that the plurality of network devices may j ointly transmit same data, so that signals sent by the plurality of network devices can be superposed in phase when the signals arrive at the terminal device, to greatly increase received signal power and greatly reduce interference. In other words, coherent transmission can greatly improve a received signal to interference plus noise ratio of the terminal device, to significantly improve data transmission performance.
2. Coherent joint reception (coherent joint reception, CJR): Information exchange is performed between a plurality of coordinated network devices. The plurality of coordinated network devices jointly receive data sent by a terminal device served by the plurality of coordinated network devices, and perform collaborative processing on the received data, to form a network architecture in which a plurality of stations collaborate to receive information from a same terminal, so that reliability of an information transmission link can be improved without increasing hardware devices of a network.
3. Uplink control information (uplink control information, UCI) is usually used to transmit an acknowledgment (acknowledgement, ACK) or a negative acknowledgement (negative acknowledgement, NACK) that is of hybrid automatic repeat request (hybrid automatic repeat request, HARQ) information and that is demodulated on a physical downlink shared channel, a scheduling request (scheduling request, SR), CSI, or the like. The UCI may include one or more of the CSI, the HARQ information, and the SR. The HARQ information may include an ACK or a NACK fed back for one or more physical downlink shared channels. The ACK may indicate that the physical downlink shared channel is successfully received, and data on the physical downlink shared channel is successfully decoded. The NACK may indicate that the physical downlink shared channel is not successfully received, or data on the physical downlink shared channel is not successfully decoded. A network device may retransmit data based on a NACK fed back by a terminal device. The SR is used by the terminal device to request the network device to allocate a physical uplink shared channel resource. The CSI may include one or more of a precoding matrix indicator (precoding matrix indicator, PMI), a rank indicator (rank indicator, RI), a channel quality indicator (channel quality indicator, CQI), and channel state information reference signal (channel state information reference signal, CSI-RS) resource indication information (CSI-RS resource indication, CRI). Based on different time domain behavior, the CSI may be further classified into periodic (periodic) CSI, semi-persistent (semi-persistent) CSI, and aperiodic (aperiodic) CSI.
4. Downlink control information (downlink control information, DCI) is control information used to schedule a downlink data channel (for example, a physical downlink shared channel) or an uplink data channel (for example, a physical uplink shared channel), other control information sent through a downlink, or the like.
5. A physical uplink control channel (physical uplink control channel, PUCCH) may be used to transmit UCI. Based on content included in the UCI, a resource of the PUCCH used to transmit the UCI may be determined in different manners.
6. A physical uplink shared channel (physical uplink shared channel, PUSCH) may be used to transmit uplink data. The PUSCH may be scheduled by a network device, for example, by using DCI on a PDCCH. This scheduling manner may be referred to as a dynamic grant (dynamic grant). The PUSCH may alternatively have a configured grant (configured grant). The configured grant may be a fully radio resource control (radio resource control, RRC)-configured uplink grant (fully RRC-configured UL grant), and this grant manner may be referred to as a type 1 PUSCH transmission with a configured grant (Type 1 PUSCH transmission with a configured grant). Alternatively, the configured grant may be a configured grant that needs to be triggered by the PDCCH, and this grant manner may be referred to as a type 2 PUSCH transmission with a configured grant (Type 2 PUSCH transmission with a configured grant). Usually, the dynamic grant may be used for data scheduling with a high delay performance requirement, and the configured grant may be used for data scheduling with a low delay performance requirement. In addition, the configured grant is that the network device activates an uplink grant for one time for a terminal device. When the terminal device does not receive deactivation, the terminal device always uses a resource of the uplink grant to perform uplink transmission. The dynamic grant is that the network device needs to grant a resource of each uplink transmission of the terminal device. It should be understood that the PUSCH grant manners listed above are merely examples, and the PUSCH grant manners are not limited in this application.

If the network device schedules the PUSCH based on the DCI, the network device may schedule the PUSCH based on, for example, a DCI format (format) 0_0 or a DCI format 0_1, and indicate a time domain position and a frequency domain position of the PUSCH in the DCI.

If the PUSCH is a PUSCH with the configured grant, the network device may configure a resource for the PUSCH with the configured grant based on, for example, a bandwidth part (bandwidth part, BWP) uplink dedicated parameter, for example, based on a physical uplink shared channel control information element (PUSCH-Config IE) in a higher layer parameter. Parameters configured in PUSCH-Config IE may include, for example, a data scrambling identifier, a demodulation reference signal (demodulation reference signal, DMRS) type, and power control.

7. A physical downlink shared channel (physical downlink shared channel, PDSCH) is mainly used for downlink data transmission, or may be used for transmission of a paging message and some system information.

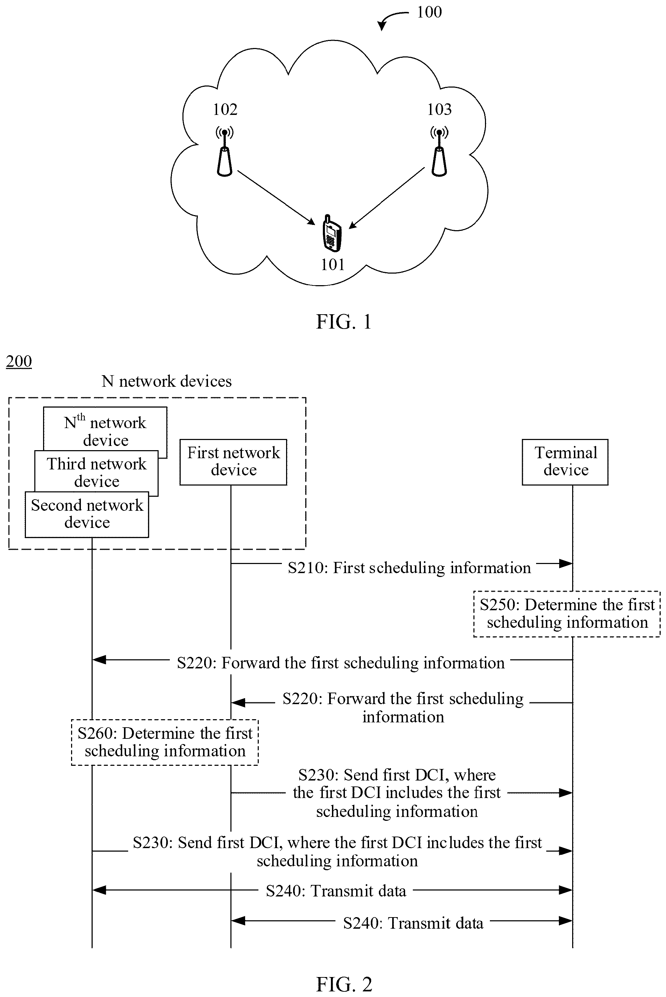

For ease of understanding of embodiments of this application, a communication system shown in FIG. 1 is first used as an example to describe in detail a communication system to which the method provided in embodiments of this application is applicable. FIG. 1 is a diagram of an architecture of a communication system 100 applicable to embodiments of this application. As shown in the figure, the communication system 100 may include at least one terminal device, for example, a terminal device 101 shown in the figure. The communication system 100 may further include at least two network devices, for example, a network device 102 and a network device 103 shown in the figure. Information exchange between the network device 102 and the network device 103 is implemented through non-ideal BH. In the communication system 100, the network device 102 and the network device 103 may communicate with each other through a BH link. The BH link may be a wired BH link (for example, an optical fiber or a copper cable), or may be a wireless BH link (for example, a microwave). The network device 102 and the network device 103 may collaborate with each other to provide a service for the terminal device 101. Therefore, the terminal device 101 may separately communicate with the network device 102 and the network device 103 through radio links. It should be noted that FIG. 1 is merely an example. In an actual communication system, three or more network devices may further collaborate with each other to provide a service for the terminal device 101.

Transmission between collaborative network devices may be classified into ideal backhaul (ideal backhaul) and non-ideal backhaul (non-ideal backhaul). For example, a communication delay between two stations in a case of ideal backhaul may be at a microsecond level, and may be ignored compared with millisecond-level data scheduling in NR. A communication delay between two stations in a case of non-ideal backhaul may be at a millisecond level, and cannot be ignored compared with millisecond-level data scheduling in NR.

It should be understood that, in a case of non-ideal backhaul, when the network device and the terminal device perform coordinated transmission, a backhaul delay of information exchange between network devices is large. In other words, an extremely large delay exists in a process of unifying scheduling information through interaction between the network devices. Therefore, it is difficult to implement CJT in a network communication system of non-ideal backhaul.

In view of this, this application provides a data scheduling method for coordinated transmission, mainly applied to a non-ideal backhaul wireless communication network, for example, an IPRAN networking scenario in NR. A communication process occurs between a network device and a terminal device, and a plurality of network devices transmit data to one terminal device through CJT. Further, the data scheduling method for coordinated transmission provided in this application may be further applied to CJR, namely, a scenario in which a plurality of network devices receive uplink data sent by one terminal device.

According to the data scheduling method for coordinated transmission provided in this application, a terminal device forwards, to all network devices participating in coordinated transmission, scheduling information delivered by a master network device (also referred to as a master base station), to ensure unified scheduling information between all the network devices participating in coordinated transmission, so that a network device receiving the scheduling information can send downlink data of CJT or receive uplink data of CJR based on the scheduling information.

According to the data scheduling method for coordinated transmission provided in this application, the terminal device forwards the scheduling information delivered by the master network device to a plurality of network devices participating in coordinated transmission. In this process, scheduling information between network devices is unified. According to the data scheduling method for coordinated transmission provided in this application, not only CJT in a non-ideal backhaul scenario can be implemented, but also CJR in a non-ideal backhaul scenario can be implemented. User experience is improved while a data transmission delay is reduced.

For ease of understanding embodiments of this application, the following descriptions are provided.
1. In embodiments of this application, higher layer signaling is used. For example, the higher layer signaling may be a radio resource control (radio resource control, RRC) message, or may be other higher layer signaling. This is not limited in this application.
2. In embodiments of this application, the term "indication" may include a direct indication and an indirect indication, or may include an explicit indication and an implicit indication. Information indicated by a specific piece of information (for example, the following indication information, indication field, or configuration information) is referred to as to-be-indicated information. In a specific implementation process, the to-be-indicated information is indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated based on an arrangement sequence of all pieces of information that is pre-agreed on (for example, stipulated in a protocol), to reduce indication overheads to some extent.
3. "First", "second", and various numbers in the following embodiments are merely used for differentiation for ease of description, but are not intended to limit the scope of embodiments of this application. For example, the terms are used to differentiate between different indication information.
4. In the following embodiments, "pre-obtain" or "preset" may include an indication performed by a network device by using signaling or predefinition (for example, a definition in a protocol); may be a definition in a communication protocol and a configuration in an access network device and a terminal device of two communication parties; or may be that the network device performs determining and provides a configuration for a terminal device. The configuration may be a configuration displayed by using signaling or a configuration implicitly provided based on other information. "Predefinition" may be implemented by pre-storing corresponding code or a table in a device (for example, including a terminal device and a network device); or implemented in another manner that may indicate related information. A specific implementation of "predefinition" is not limited in this application.
5. A data scheduling method for coordinated transmission provided in this application is not only applicable to a TDD communication system, but also applicable to an FDD communication system.
6. In embodiments of this application, coordinated transmission is involved, and coordinated transmission includes CJT and CJR. CJT is downlink data transmission in coordinated transmission, and CJR is uplink data transmission in coordinated transmission.

The following describes in detail a data scheduling method for coordinated transmission provided in this application with reference to the accompanying drawings. Because one or more network devices in a wireless communication system may provide a service for a same terminal device, any network device that is in the wireless communication system and that serves a same terminal device may communicate with the terminal device in the data scheduling method for coordinated transmission provided in this application. That the network device communicate with the terminal device may include: The network device sends downlink data to the terminal device to the terminal device (downlink communication), and the terminal device sends uplink data to the network device (uplink communication). Both are applicable to the data scheduling method for coordinated transmission provided in this application. The following describes in detail the data scheduling method for coordinated transmission provided in embodiments of this application by using an interaction process between one terminal device and N network devices as an example.

FIG. 2 is a schematic flowchart of a data scheduling method 200 for coordinated transmission according to an embodiment of this application from a perspective of device interaction. FIG. 2 shows a schematic procedure of information exchange between a terminal device and N network devices. The N network devices are network devices participating in coordinated transmission of the terminal device. The method 200 may include S210 to S230. Steps in the method 200 are described in detail below.

S210: A first network device sends first scheduling information to the terminal device.

Specifically, the first network device sends the first scheduling information to the terminal device. Correspondingly, the terminal device receives the first scheduling information from the first network device. The first scheduling information includes a first time-frequency resource, a first MCS order, and a first transport layer quantity that are scheduled by the first network device for the terminal device.

Specifically, the first time-frequency resource includes a time domain resource and a frequency domain resource. The time domain resource may be an orthogonal frequency division multiplexing (orthogonal frequency division multiplexing, OFDM) symbol, and the frequency domain resource may be a resource block (resource block, RB) or a resource block group (resource block group, RBG). The first time-frequency resource carries data transmitted between each of the N network devices and the terminal device. The data may be downlink data, or may be uplink data. The first MCS order is used to determine a modulation order and a channel coding rate of data transmission of a PDSCH or a PUSCH. For example, the modulation order may be 2, 4, 6, or 8, which respectively correspond to quadrature phase shift keying (quadrature phase shift keying, QPSK), 16 quadrature amplitude phase modulation (16 quadrature amplitude modulation, 16QAM), 64 quadrature amplitude phase modulation (64 quadrature amplitude modulation, 64QAM), and 256 quadrature amplitude phase modulation (256 quadrature amplitude modulation, 256QAM). The channel coding rate may be 490/1024, 948/1024, or the like. The first transport layer quantity is a quantity of data streams of downlink data sent by the network device to the terminal device, or a quantity of data streams of uplink data sent by the terminal device, and may also be referred to as a first quantity of transport layers, a first transmission order, or a first transmission rank (rank).

It should be noted that a name of the first scheduling information is merely an example, and may be another name, for example, start scheduling information, initial scheduling information, or pre-scheduling information. This is not limited in this application. It should be understood that, in this embodiment of this application, the first scheduling information is scheduling information determined by the first network device.

In this embodiment of this application, the first network device is a network device that sends the first scheduling information to the terminal device, the N network devices are network devices participating in coordinated transmission, and the N network devices include the first network device. Optionally, the N network devices participating in coordinated transmission are determined based on channels between the terminal device and all the network devices, or determined based on locations of all the network devices, or determined based on a rule preset in a standard. It should be understood that determining of the N network devices participating in coordinated transmission is merely an example rather than a limitation. In addition, it should be further understood that for coordinated transmission of CJT, the N network devices participating in coordinated transmission obtain and store data that needs to be sent to the terminal device.

In addition, the first network device may be referred to as a master network device, and another network device may be referred to as a slave network device. For example, in the N network devices of coordinated transmission, a network device with maximum strength of a reference signal received power (reference signal received power, RSRP) of receiving by the terminal device may serve as a master network device, and another device may serve as a slave network device; or a network device closest to the terminal device serves as a master network device, and another device serves as a slave network device. It should be understood that the foregoing manner of determining the master network device is merely an example rather than a limitation.

It should be understood that the first network device may independently determine the first scheduling information corresponding to the first network device based on a real-time service requirement and a channel condition between the network device and the terminal device. Alternatively, after the N network devices exchange channel statistics information between the terminal device and the network devices (for example, a channel covariance matrix corresponding to a transmission channel between the terminal device and all the network devices) through non-ideal BH, the first network device determines the first scheduling information based on a real-time service requirement, a channel condition between the first network device and the terminal device, and a channel condition between another network device and the terminal device.

It should be noted that, in this embodiment of this application, the first scheduling information sent by the first network device to the terminal device may be understood as scheduling information that needs to be forwarded by the terminal device. To be specific, the terminal device needs to forward, to the N network devices participating in coordinated transmission, the first scheduling information sent by the first network device, so that the terminal device can perform coordinated transmission with all the network devices only when the N network devices participating in coordinated transmission all obtain the first scheduling information and use the first scheduling information as respective scheduling information.

In an implementation, the first scheduling information sent by the first network device is sent to the terminal device based on DCI. In other words, in this embodiment of this application, second DCI sent by the first network device to the terminal device includes the first scheduling information sent by the first network device to the terminal device.

Optionally, an antenna port indication field in the DCI may be reused for a first transport layer quantity included in the second DCI. For example, when the first network device indicates, to the terminal device, that the first transport layer quantity is 3, the first network device may simultaneously indicate, based on indication information that is in the DCI and that indicates, to the terminal device, that an antenna port quantity is 3, that the first transport layer quantity is 3. Correspondingly, the terminal device may determine, based on the indication information indicating the antenna port quantity, that the antenna port quantity indicated by the first network device is 3, and determine that the first transport layer quantity is 3. In an implementation, indication information indicating an antenna port to the terminal device in the second DCI indicates an index corresponding to the antenna port quantity, and the corresponding antenna port quantity is indicated based on a correspondence between an index and an antenna port quantity. In this case, when the antenna port quantity indicated by the indication information indicating the antenna port quantity corresponds to a plurality of indexes, the terminal device can determine a same first transport layer quantity based on different indexes. In other words, indication information indicating a same first transport layer quantity may indicate a plurality of indexes. In other words, the terminal device may determine the first transport layer quantity based on any index value indicated by the indication information. For example, if indexes of three ports indicated by the indication information indicating the antenna port quantity are 26, 28, and 30, when the terminal learns that an index indicated by the indication information indicating the antenna port quantity is any one of 26, 28, or 30, the terminal device may determine that the first transport layer quantity configured by the first network device for the terminal device is 3.

Alternatively, a transport layer quantity field in the second DCI may indicate the first transport layer quantity in the second DCI.

It should be understood that the first time-frequency resource in the first scheduling information may be jointly indicated by using a frequency domain resource indication field and a time domain resource indication field in the second DCI. The MCS order in the first scheduling information may be indicated by using an MCS field in the DCI.

Optionally, the first network device sends the first scheduling information to the terminal device by using a first DCI format (format). The first scheduling information included in the second DCI in the first DCI format is scheduling information pre-scheduled by the first network device. The scheduling information pre-scheduled by the first network device may be understood as scheduling information that needs to be forwarded by the terminal device. To be specific, after receiving the pre-scheduled scheduling information, the terminal device does not transmit data on a time-frequency resource, or the like in the pre-scheduled scheduling information. In other words, the second DCI that carries the first scheduling information is not used for scheduling the PDSCH or the PUSCH.

Optionally, the second DCI sent by the first network device to the terminal device includes first indication information, and the first indication information indicates that the first scheduling information is scheduling information pre-scheduled by the first network device.

Optionally, the first indication information is indication information carried in a newly defined field in the second DCI, for example, 1 bit included in an indication field occupied by the first indication information. For example, when a value of the bit is 0, it indicates that the DCI does not carry the first scheduling information; and when a value of the bit is 1, it indicates that the DCI carries the first scheduling information sent by the first network device to the terminal device.

Alternatively, the first indication information may be an RNTI used to scramble a CRC code of the second DCI. To be specific, the CRC code of the second DCI is scrambled by using a specific RNTI. After detecting the second DCI corresponding to the CRC code scrambled by using the specific RNTI, the terminal device may learn that information carried in the second DCI includes the first scheduling information.

It should be understood that a representation form of the first indication information is merely an example rather than a limitation. In addition, a bit quantity occupied by the first indication information and a meaning corresponding to a value of the bit quantity are merely examples rather than limitations.

Optionally, when the first network device sends the first scheduling information by using the first DCI format, the first network device may further distinguish, based on an indication field in DCI in the first DCI format, whether the first scheduling information is scheduling information used for CJT or scheduling information used for CJR.

Optionally, the second DCI sent by the first network device to the terminal device includes second indication information, and the second indication information indicates that the first scheduling information carried in the second DCI is scheduling information used for CJT or scheduling information used for CJR. Specifically, when the first scheduling information delivered by the first network device is used to schedule downlink data, the second indication information indicates that the first scheduling information is scheduling information used for CJT. When the first scheduling information delivered by the first network device is used to schedule uplink data, the second indication information indicates that the first scheduling information is scheduling information used for CJR.

Optionally, whether the first scheduling information sent by the first network device is scheduling information used for CJT or scheduling information used for CJR is predefined.

In another implementation, the first scheduling information sent by the first network device may alternatively be carried in configuration information sent by the first network device to the terminal device. In other words, the first network device sends the first scheduling information to the terminal device by using the configuration information. For example, the configuration information may be carried in higher layer signaling or media access control control element (MAC control element, MAC-CE) signaling. Similarly, the first indication information may also be carried in the configuration information sent by the first network device to the terminal device.

S220: The terminal device forwards the first scheduling information.

Specifically, after receiving the first scheduling information sent by the first network device, the terminal device forwards the first scheduling information on an uplink time-frequency resource.

In an implementation, the terminal device forwards the first scheduling information by using UCI.

Optionally, the terminal device sends the UCI on the pre-obtained uplink time-frequency resource. The UCI includes the first scheduling information. Optionally, the pre-obtained uplink time-frequency resource may be a time-frequency resource of the PUCCH or a time-frequency resource of a semi-persistently scheduled PUSCH.

For example, the uplink time-frequency resource may be a time-frequency resource scheduled by the N network devices in a static scheduling (static scheduling) or semi-persistent scheduling (semi-persistent scheduling) manner. For example, the uplink time-frequency resource is higher layer signaling sent by any one of the N network devices to the terminal device, for example, a time-frequency resource indicated by RRC signaling. Alternatively, the uplink time-frequency resource is defined in a protocol. It should be understood that the uplink time-frequency resource is an uplink resource shared by the N network devices. When the terminal device needs to send the UCI on the uplink time-frequency resource, the network device does not need to dynamically trigger the UCI by sending DCI to the terminal device.

Alternatively, the uplink time-frequency resource may be periodically configured by the N network devices. In other words, the N network devices indicate, based on an agreed period, that the terminal device may send the UCI on the uplink time-frequency resource. For example, the agreed period may be indicated by at least one of the N network devices to the terminal device by using higher layer signaling, for example, RRC signaling. For example, when the period agreed on by the N network devices is 20 slots (slots), after receiving information about the period, the terminal device may choose to send the UCI in a slot such as a 1^{st} slot, a 21^{st} slot, or a 41^{st} slot. It should be understood that when the uplink time-frequency resource is configured by the N network devices, the terminal device forwards the first scheduling information to the N network devices on the uplink time-frequency resource.

Optionally, the terminal device forwards the first scheduling information by using the periodically sent UCI. When the first scheduling information is carried in the periodically sent UCI, the N network devices may obtain, on the uplink time-frequency resource in a periodic detection manner, the UCI that carries the first scheduling information. For example, when the period in which the terminal device sends the UCI is 20 slots, the N network devices may detect, by using 20 slots as a period, whether the UCI exists on the uplink time-frequency resource. After detecting the UCI, the N network devices determine, through parsing, that the UCI includes the first scheduling information.

Optionally, for an FDD system, a frequency band (frequency band) of a time-frequency resource that carries UCI is located in a second frequency band, a frequency band of a downlink time-frequency resource that carries DCI (for example, the first DCI or the second DCI mentioned above) is located in a first frequency band, the second frequency band does not overlap the first frequency band, and the second frequency band is an uplink frequency band corresponding to the first frequency band.

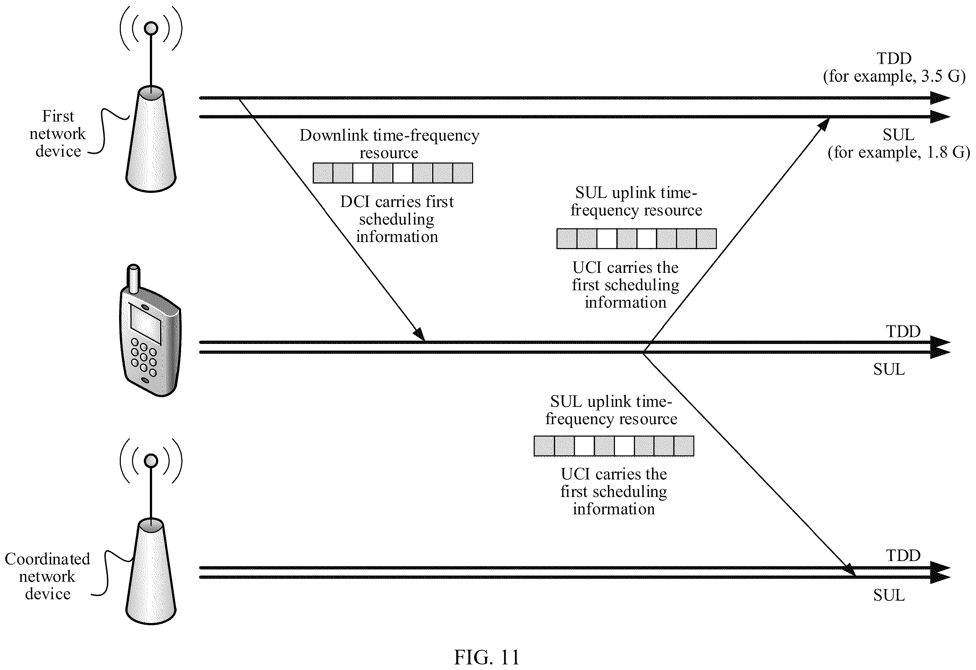

For a TDD system, an uplink time-frequency resource that carries the UCI may be located in a first frequency band or a second frequency band. The first frequency band is a frequency band that carries DCI (for example, the first DCI or the second DCI mentioned above), and the second frequency band is a frequency band that does not overlap the first frequency band. For example, when the solution of this application is applied to a 5G system, the second frequency band may be a supplementary uplink (supplementary uplink, SUL) frequency band. Further, the UCI may be preferentially carried on the SUL frequency band. For example, FIG. 11 is a diagram in which a terminal device preferentially sends UCI on an SUL frequency band. Specifically, when receiving the first scheduling information carried in the DCI from the first network device, and forwarding the first scheduling information, the terminal device selects an uplink time-frequency resource on the SUL frequency band to carry the UCI including the first scheduling information.

It should be understood that when the UCI is carried on the SUL frequency band, an interaction delay during scheduling can be reduced, and in particular, a delay introduced when an uplink slot needs to be waited in the TDD system can be reduced. For example, in the TDD system, when a small quantity of uplink slots are allocated, after receiving the DCI that carries the first scheduling information, the terminal device can have an uplink sending opportunity only when waiting a large quantity of downlink slots. Therefore, an extra delay is introduced. When an SUL carrier is configured, continuous uplink sending can be performed on the SUL carrier, to effectively reduce a scheduling information report delay.

It should be understood that, when the UCI does not need to be sent, the uplink time-frequency resource may be used to transmit data in a PUSCH transmission phase. In other words, when the UCI is not sent, the uplink time-frequency resource may be reused as a time-frequency resource for transmitting the uplink data.

In another implementation, the first scheduling information forwarded by the terminal device is carried in a response message. For example, when the first network device sends the first scheduling information to the terminal device by using the configuration information, after receiving the first scheduling information sent by the first network device, the terminal device sends the first scheduling information to the N network devices by using the response message. For example, when the N network devices send other information to the terminal device by using higher layer signaling (for example, RRC signaling) or MAC-CE signaling, the terminal device may use, to carry the received first scheduling information, a response message for responding to the higher layer signaling or the MAC-CE signaling of the N network devices, and send the response message to all the network devices.

In still another implementation, the terminal device may send the first scheduling information to all the network devices on a time-frequency resource of the PUSCH. It should be noted that the resource of the PUSCH may be scheduled by using a configured grant. After the N network devices activate an uplink grant for one time for the terminal device, when the terminal device needs to send the first scheduling information, the N network devices may receive, on the resource of the PUSCH, the first scheduling information sent by the terminal device.

For example, Table 1 shows content included in the UCI.

**Table 1**

| |
|---|
| Frequency domain resource indication field |
| Time domain resource indication field |
| MCS field |
| Transport layer quantity field |
| New data indication field |
| Hybrid automatic repeat request (hybrid automatic repeat request, HARQ)-acknowledgment (acknowledgement, ACK) resource field |

In Table 1, the frequency domain resource indication field indicates a set of frequency domain resources such as an RB or an RBG of data and/or signaling carried in the UCI.

The time domain resource indication field indicates allocation of the time domain resource of the data and/or signaling carried in the UCI.

The MCS field is used to determine an index of an MCS order of the data and/or signaling carried in the UCI.

The transport layer quantity field is used to determine a transport layer quantity of the data and/or signaling carried in the UCI.

A transport block size (transport block size, TBS) of the data may be determined based on the frequency domain resource indication field, the time domain resource indication field, the MCS field, and the transport layer quantity field.

Optionally, the UCI further includes at least one of the following:
the new data indication field, indicating whether transmission data scheduled based on the first scheduling information is new transmission data or retransmission data.

The HARQ-ACK resource field indicates a time-frequency resource for transmitting acknowledgment feedback information.

It should be understood that Table 1 is merely an example rather than a limitation. In other words, when the UCI carries the first scheduling information, this falls within the protection scope of this application.

S230: The terminal device receives N pieces of first DCI from the N network devices, where each of the N pieces of first DCI includes the first scheduling information.

Specifically, after the N network devices receive the first scheduling information forwarded by the terminal device, the N network devices separately send the first DCI to the terminal device. Each piece of first DCI includes the first scheduling information. Correspondingly, the terminal device receives the N pieces of first DCI from the N network devices.

It should be understood that each of the N pieces of first DCI sent by the N network devices to the terminal device indicates the terminal device to perform downlink or uplink data transmission based on the first scheduling information. Therefore, each of the N pieces of first DCI includes the first scheduling information forwarded by the terminal device. It should be further understood that each of the N pieces of first DCI further includes other information, for example, redundancy version information or DCI format identifier information, for scheduling downlink or uplink data transmission. For example, when three network devices (the first network device, a second network device, and a third network device) in a communication system participate in coordinated transmission (that is, N is 3), first DCI sent by the three network devices to the terminal device is first DCI #1, first DCI #2, and first DCI #3. The first DCI #1 corresponds to the first DCI sent by the first network device to the terminal device, the first DCI #2 corresponds to first DCI sent by the second network device to the terminal device, and the first DCI #3 corresponds to first DCI sent by the third network device to the terminal device. It should be understood that the first DCI #1, the first DCI #2, and the first DCI #3 each carry the first scheduling information.

It should be noted that, in this embodiment of this application, the first scheduling information sent by the first network device to the terminal device in S210 is pre-scheduled scheduling information. To be specific, the first scheduling information received by the terminal device in S210 is only scheduling information that needs to be forwarded by the terminal device, and is not used by the terminal device to transmit data with the first network device once receiving the first scheduling information. In S203, the first scheduling information carried in the N pieces of first DCI sent by the N network devices is used by the terminal device to perform corresponding data transmission with the network device based on the first scheduling information after the terminal device receives the first scheduling information.

S240: The terminal device transmits data with the N network devices.

Specifically, after the terminal device receives the first scheduling information from the N network devices, the N network devices perform coordinated transmission of data with the terminal device.

When the first scheduling information is scheduling information used for CJT, the terminal device receives, on the first time-frequency resource, same downlink data sent by the N network devices. When the first scheduling information is scheduling information used for CJR, the terminal device sends the uplink data on the first time-frequency resource, and correspondingly, the N network devices receive the uplink data on the first time-frequency resource. For example, in CJT, the N network devices transmit same downlink data to the terminal device on the first time-frequency resource based on the first MCS order and the first transport layer quantity; and in CJR, the N network devices receive the uplink data from the terminal device on the first time-frequency resource based on the first MCS order and the first transport layer quantity.

It should be noted that, for the N network devices participating in coordinated transmission, if the first scheduling information is scheduling information used for CJT, the N network devices have stored same downlink data before the first network device sends the first scheduling information to the terminal device. If the first scheduling information is scheduling information used for CJR, the N network devices do not store data before receiving the first scheduling information sent by the terminal device. Therefore, after receiving the first scheduling information, the N network devices determine that the first scheduling information is scheduling information for scheduling the uplink data.

Based on the foregoing solution, in this application, a manner in which the terminal device forwards the pre-scheduling information of the master network device is used, so that a plurality of network devices participating in coordinated transmission obtain same scheduling information, to overcome a problem of a too long delay when scheduling information is exchanged between all the network devices during non-ideal backhaul, and implement coordinated transmission in a non-ideal backhaul network.

Optionally, after the N network devices receive the first scheduling information forwarded by the terminal device, the N network devices wait first time (or referred to as time T1) and then transmit data with the terminal device. For example, after the N network devices receive the first scheduling information (for example, the first scheduling information may be carried in the UCI) from the terminal device, each of the N network devices may trigger a counter (for example, the counter may be a timing countdown counter), a moment at which the first scheduling information is received is a trigger moment of the counter, and a value of the counter is zero after the first time passes. In this case, the N network devices send the downlink data to the terminal device, or the N network devices receive the uplink data sent by the terminal device.

In an implementation, the first time is preset. When the first time is a preset value, the N network devices each may be provided with a counter that starts the first time. Alternatively, the first time may be determined by the N network devices through interaction. For example, the N network devices determine the first time through negotiation and non-ideal backhaul interaction.

In another implementation, the first time is determined by the first network device and sent to the terminal device by using higher layer signaling, for example, the indication information of the first time is sent to the terminal device by using RRC signaling or MAC-CE signaling.

In still another implementation, the first time is determined by the first network device and sent to the terminal device by using the DCI. Optionally, the first scheduling information sent by the first network device in S210 includes the indication information of the first time.

It should be noted that the foregoing manner of determining the first time is merely an example rather than a limitation.

After the terminal device obtains a value of the first time, the terminal device may send the first time by using the UCI. In other words, the forwarded first scheduling information includes the indication information of the first time. Alternatively, the terminal device may send the first time by using other signaling. This is not limited herein. When the terminal device sends the indication information of the first time by using the UCI, an indication field of the first time may be added to Table 1. In other words, an indication field that indicates the first time is defined in the UCI, and a field included in the indication field of the first time indicates the first time.

Optionally, the first time may be understood as a time interval between a moment at which any network device receives the first scheduling information forwarded by the terminal device and a moment at which the network device sends the first DCI to the terminal device; or the first time may be understood as a time interval between a moment at which any network device receives the first scheduling information forwarded by the terminal device and a moment at which the network device and the terminal device start to transmit data.

It should be noted that when the first time is preset in a protocol or determined by the N network devices, the UCI sent by the terminal device does not include the first time, and the N network devices may determine, based on the first time preset in the protocol or determined through mutual interaction, a start time of a slot for uplink data transmission or downlink data transmission; or the N network devices may determine, based on the first time preset in the protocol or determined through mutual interaction, start time for sending the N pieces of first DCI, to ensure that start moments of slots for carrying data of all the network devices are aligned.

After detecting the UCI in an uplink slot, the N network devices may send, to the terminal device in a next downlink slot after the UCI, DCI (the DCI is the first DCI that carries the first scheduling information) indicating to schedule the PDSCH (used to send the downlink data) or the PUSCH (used to send the uplink data). Alternatively, when the first time is used in the system, the first time may be a time interval between time at which the network device detects the UCI and time at which the network device sends the DCI for scheduling the PDSCH or the PUSCH.

It should be understood that, when the first time is not set in the communication system, after the N networks receive the first scheduling information from the terminal device, and L1 processing of same time (for example, two slots) is performed, the N network devices may choose to send, in a next slot after L1 processing (a next downlink slot after L1 processing in the TDD system, or a next slot after L1 processing in the FDD system), the first DCI that carries the first scheduling information, to schedule the uplink data or the downlink data, so that the N network devices transmit data at a same moment. However, in some scenarios, for example, after some network devices receive the first scheduling information, an L1 processing delay is too long because load of the network devices is too heavy; or the N network devices cannot simultaneously send the DCI to the terminal device in a same slot because current channel conditions of the network devices are poor. Therefore, in this embodiment of this application, the first time may be set based on load or a current channel condition of the network device, so that each network device performs data scheduling and data transmission in an agreed slot after L1 processing. In addition, in this embodiment of this application, during each time of scheduling, first time corresponding to the current time of scheduling may be flexibly set based on a situation such as the load of the network device in the current time of scheduling. In other words, in this embodiment of this application, the first time of each coordinated transmission may be set to a different time interval, so that data is flexibly scheduled, to improve user experience.

In addition, it should be further noted that, in the communication system, the network device may choose whether to participate in coordinated transmission with the terminal device. In other words, all network devices that receive the first scheduling information may choose to participate in coordinated transmission or not participate in coordinated transmission. When the network device chooses not to join coordinated transmission with the terminal device, in a CJT scenario, the network device may delete corresponding transmission data based on the first scheduling information, to avoid incorrectly sending data in a cache to the terminal device during next coordinated transmission. In a CJR scenario, the network device does not receive the uplink data from the terminal device. It should be understood that, in a scenario shown in FIG. 2, the N network devices are network devices participating in coordinated transmission. In other words, FIG. 2 shows an example in which all the N network devices participate in coordinated transmission. In other words, in the scenario shown in FIG. 2, N network devices perform coordinated transmission with the terminal device.

Optionally, before S220, the method further includes S250: The terminal device determines the first scheduling information.

Specifically, after receiving the first scheduling information sent by the first network device, the terminal device determines the first scheduling information or determines that the first scheduling information is scheduling information that needs to be forwarded. For example, the terminal device parses the second DCI, to determine that the second DCI includes the first scheduling information. In other words, the terminal device determines that the received first scheduling information is the scheduling information that needs to be forwarded.

Optionally, after S220, the method further includes S260: The N network devices determine the first scheduling information. For example, each network device parses the UCI, to determine that the UCI includes the first scheduling information. In other words, the N network devices determine that the first scheduling information sent by the terminal device is received.

Optionally, the method 200 may further include a process in which the first network device obtains an uplink channel or a downlink channel.

When obtaining uplink channel state information, the first network device may obtain the uplink channel state information based on a sounding reference signal (sounding reference signal, SRS) sent by the terminal device to the first network device.

In a time division multiplexing system, because the uplink channel and the downlink channel have reciprocity, when the first network device obtains the uplink channel state information, the terminal device first sends an SRS to the first network device, so that the first network device can obtain the uplink channel state information. Then, the first network device may estimate downlink channel state information by measuring the uplink channel, that is, obtain the corresponding downlink channel state information based on reciprocity between the uplink channel and the downlink channel.

In another implementation, the terminal device may receive a channel state information-reference signal (channel state information-reference signal, CSI-RS) from the first network device, to perform CSI measurement and feedback on the downlink channel. The CSI may include but is not limited to a precoding matrix indicator (precoding matrix indicator, PMI), a rank indicator (rank indicator, RI), a channel quality indicator (channel quality indicator, CQI), and a layer indicator (layer indicator, LI). This is not limited in this application. For example, the first network device may determine, based on a CQI fed back by the terminal device, an MCS corresponding to channel quality, to perform coding and modulation on a to-be-sent signal. Alternatively, the first network device may determine, based on the RI and the PMI that are fed back by the terminal device, the transport layer quantity and a precoding matrix matching the transport layer quantity, to precode the to-be-sent signal.

Based on the data scheduling method for coordinated transmission provided in this embodiment of this application, the terminal device forwards the first scheduling information of the first network device, so that all network devices participating in coordinated transmission can implement coordinated transmission of non-ideal backhaul based on the first scheduling information.

It should be understood that, in this embodiment of this application, when the first network device determines the first scheduling information by considering a real-time service requirement, a channel condition between the first network device and the terminal device, and a channel condition between another network device and the terminal device, so that information transmission between the terminal device and all the network devices participating in coordinated transmission can be ensured, and system reliability and stability can be further improved.

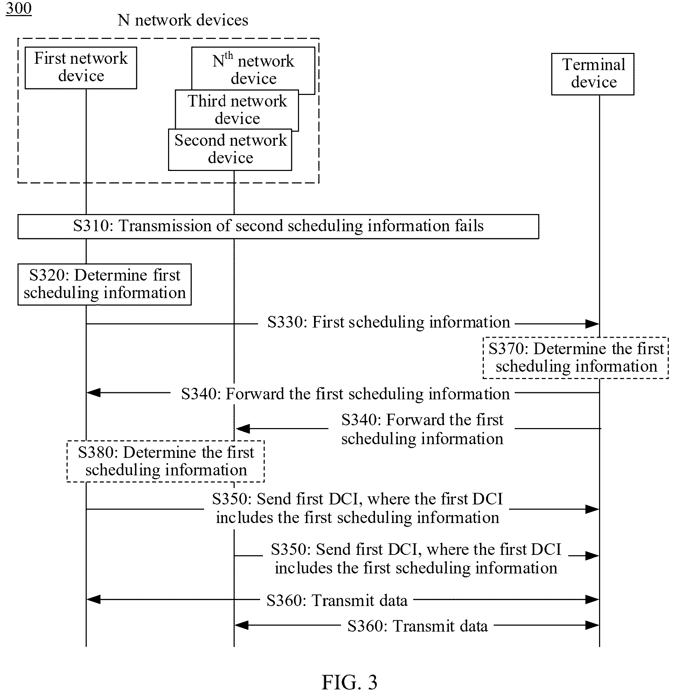

In some scenarios in which transmission is unreliable, for example, in a communication system, when information (for example, second scheduling information in FIG. 3) that is used for pre-scheduling, that is delivered by a first network device, and that is received by a terminal device is not correctly demodulated, and even second scheduling information sent by a network device is not received, or second scheduling information forwarded by a terminal device is not correctly received by a first network device (for example, demodulation fails or the second scheduling information is not received), an embodiment of this application provides a data scheduling method 300 for coordinated transmission, as shown in FIG. 3. FIG. 3 is a schematic flowchart of another data scheduling method 300 for coordinated transmission according to an embodiment of this application from a perspective of device interaction. The method 300 may include S310 to S340. Steps in the method 300 are described in detail below.

S310: Transmission of second scheduling information fails.

The second scheduling information includes a second time-frequency resource, a second MCS order, and a second transport layer quantity that are pre-scheduled by the first network device for the terminal device. For descriptions of the second time-frequency resource, the second MCS order, and the second transport layer quantity, respectively refer to the descriptions of the first time-frequency resource, the first MCS order, and the first transport layer quantity in S210. Details are not described herein again.

Specifically, that transmission of the second scheduling information fails may include but is not limited to: the first network device does not receive the second scheduling information forwarded by the terminal device; or the first network device receives the second scheduling information forwarded by the terminal device but does not correctly demodulate the second scheduling information; or the terminal device does not receive the second scheduling information sent by the first network device; or the terminal device receives the first scheduling information sent by the first network device but does not correctly demodulate the second scheduling information. The first network device does not receive the second scheduling information forwarded by the terminal device, for example, including: the terminal device does not receive the second scheduling information sent by the first network device, and therefore does not forward the second scheduling information. Correspondingly, the first network device does not receive the second scheduling information forwarded by the terminal device. Alternatively, the terminal device receives the second scheduling information sent by the first network device but does not correctly demodulate the second scheduling information, and therefore does not forward the second scheduling information. Correspondingly, the first network device does not receive the second scheduling information forwarded by the terminal device. For example, when the first network device does not receive the second scheduling information from the terminal device after waiting a period of time, the first network device may determine that the terminal device does not receive the second scheduling information or the terminal device does not correctly demodulate the second scheduling information. For another example, after the first network device receives the scheduling information from the terminal device, when the first network device finds, through parsing, that the scheduling information forwarded by the terminal device is inconsistent with the second scheduling information sent by the first network device, the first network device determines that the terminal device does not correctly demodulate the second scheduling information or that the first network device unsuccessfully demodulates the scheduling information forwarded by the terminal device.

It should be understood that S310 merely describes a re-scheduling scenario in which the first network device and the terminal device unsuccessfully transmit the second scheduling information and scheduling is re-initiated to the first network device.

It should be understood that before S320, the first network device may initiate a plurality of times of re-scheduling. For example, the first network device unsuccessfully transmits the third scheduling information to the terminal device, or the first network device unsuccessfully transmits the fourth scheduling information to the terminal device. In FIG. 3, only a scenario in which re-scheduling is initiated for one time is used as an example for description.

S320: The first network device determines the first scheduling information.

Specifically, after sending of the second scheduling information fails, the first network device initiates re-scheduling, and determines the first scheduling information for re-scheduling.

Optionally, the first scheduling information and the second scheduling information may be completely the same, or may be partially the same, or may be completely different. For example, when the first scheduling information is completely the same as the second scheduling information, for example, in a scenario in which the first network device continuously initiates scheduling, that is, interval time between all times of scheduling performed by the network device is short, when a previous time of scheduling fails, information about the previous time of scheduling may continue to be used for re-scheduling. When the first scheduling information is partially the same as the second scheduling information, any one pair of information or any two pairs of information in the first time-frequency resource and the second time-frequency resource, the first MCS order and the second MCS, and the first transport layer quantity and the second transport layer quantity may be the same. When the first scheduling information is completely different from the second scheduling information, any one pair of information in the first time-frequency resource and the second time-frequency resource, the first MCS order and the second MCS, and the first transport layer quantity and the second transport layer quantity is different.

S330: A first network device sends first scheduling information to the terminal device. For related descriptions of this step, refer to S210. Details are not described herein again.

S340: The terminal device forwards the first scheduling information. For related descriptions of this step, refer to S220. Details are not described herein again.

S350: The terminal device receives N pieces of first DCI from N network devices. For related descriptions of this step, refer to S230. Details are not described herein again.

S360: The terminal device transmits data with the N network devices. For related descriptions of this step, refer to S240. Details are not described herein again.

It should be understood that, in the scenario shown in FIG. 3, when transmission of the second scheduling information between the first network device and the terminal device fails, scheduling needs to be re-initiated. To be specific, a scenario in which the first scheduling information is sent includes but is not limited to the following scenario: The second scheduling information sent by the first network device is unsuccessfully sent by the first network device to the terminal device, including: The terminal device receives the second scheduling information but does not correctly demodulate the second scheduling information, or the terminal device does not receive the second scheduling information, or the like; or the first network device does not correctly receive the second scheduling information forwarded by the terminal device, including: The first network device receives the second scheduling information but does not correctly demodulate the second scheduling information, or the first network device does not receive the second scheduling information forwarded by the terminal device, or the like. For example, when the second scheduling information sent by the first network device is carried in DCI, a scenario may be that the terminal device does not receive DCI that carries the second scheduling information (for example, missed detection occurs when the terminal device performs blind detection), or the terminal device receives DCI that carries the second scheduling information but does not correctly demodulate the DCI. That is, the terminal device unsuccessfully receives the DCI that carries the second scheduling information. When the second scheduling information forwarded by the terminal device is carried in UCI, a scenario may be that the UCI that carries the second scheduling information is not correctly received by the first network device, including but not limited to: The first network device does not receive the UCI that carries the second scheduling information, or the first network device receives the UCI that carries the second scheduling information and finds, through demodulation, that the second scheduling information carried in the UCI is different from the delivered second scheduling information. Alternatively, the first network device cannot correctly demodulate the UCI that carries the second scheduling information, or the like.

It should be noted that, in the embodiment shown in FIG. 2, descriptions are provided for a scenario in which the first network device successfully performs scheduling at a first time. To be specific, the first scheduling information sent by the first network device to the terminal device is successfully received and correctly demodulated by the terminal device. Correspondingly, the first network device correctly receives the first scheduling information forwarded by the terminal device. The method shown in FIG. 3 is a re-scheduling method provided for the foregoing several scenarios in which transmission is unreliable. In other words, when a first time of scheduling fails, the first network device initiates re-scheduling.

It should be understood that the scenario shown in FIG. 3 is still for a scenario in which the N network devices are network devices participating in coordinated transmission. In other words, FIG. 3 shows an example of a re-scheduling scenario in which all the N network devices participate in coordinated transmission.

Based on the foregoing solution, according to the data scheduling method for coordinated transmission provided in this embodiment of this application, unified scheduling information between all network devices participating in coordinated transmission can be ensured in the scenario in which transmission is unreliable, and stability of a network system is improved.

Optionally, that the first network device sends the first scheduling information is initiated after second time (or referred to as time T2). For example, after sending the second scheduling information, the first network device may trigger a counter (for example, the counter may be a timing countdown counter) in the first network device. A moment at which the second scheduling information is sent is used as a trigger moment of the counter, and a value of the counter is zero after the second time passes. In this case, if the first network device still does not correctly receive the second scheduling information forwarded by the terminal device, the first network device re-initiates scheduling, and sends the first scheduling information to the terminal device.

It should be understood that before the value of the counter is 0, if the first network device correctly receives the second scheduling information forwarded by the terminal device, the first network device sends, to the terminal device, second scheduling information for scheduling a PUSCH (corresponding to a case in which the second scheduling information is scheduling information used for CJR) or a PDSCH (corresponding to a case in which the second scheduling information is scheduling information used for CJT).

Optionally, the second time may be preset. Alternatively, the second time may be set by the first network device.

The second time is set, to ensure that the first network device re-initiates re-scheduling when scheduling fails, improve communication reliability and stability, and further improve user experience.

Optionally, before the terminal device forwards the first scheduling information, the method 300 for coordinated transmission provided in this application further includes S360. For this process, refer to S240. Before the N network devices simultaneously transmit data with the terminal device, the method 300 further includes S370. For this process, refer to S250. Details are not described herein again.

Optionally, after S340, the method further includes S380: The N network devices determine the first scheduling information. For this process, refer to S260. Details are not described herein again.

Optionally, the method 300 may further include a process in which the first network device obtains an uplink channel or a downlink channel. For this process, refer to related descriptions in FIG. 2. Details are not described herein again.

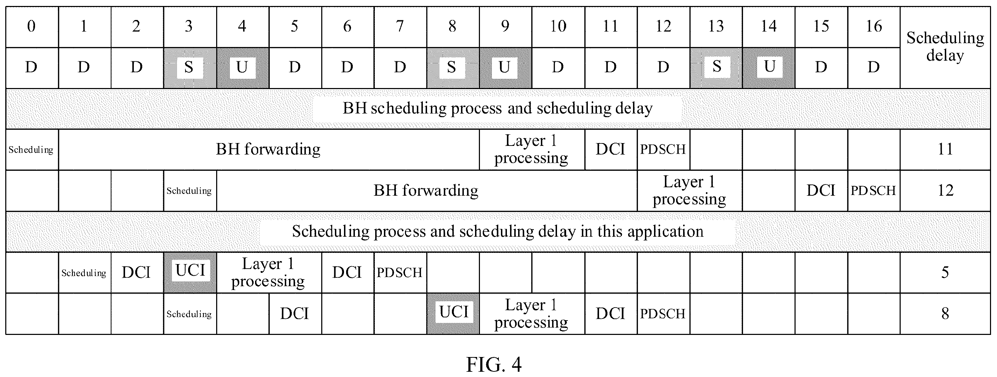

FIG. 4 is a diagram of an interaction delay comparison result between a data scheduling method for coordinated transmission and a scheduling manner of coordinated transmission performed based on BH interaction according to an embodiment of this application. In FIG. 4, an example in which a system configuration is a downlink-to-uplink time ratio of 4:1, a subcarrier spacing of 30 kHz, and each transmission time interval (transmission time interval, TTI) or slot of 0.5 ms is used in a TDD communication system is used for description.

Specifically, in FIG. 4, for a scheduling manner of coordinated transmission of BH interaction, if a first network device starts scheduling in a TTI 0 (or a slot 0), the first network device exchanges a scheduling result with another network device in coordinated transmission through BH. It is considered that a typical BH delay is 4 ms, and therefore, BH interaction is completed through eight TTIs (or slots). In this case, a network device that performs coordinated transmission with a terminal device starts layer 1 (L1) processing in a TTI 9 (or a slot 9) (this process includes an operation such as a weight value design; for the process, refer to current related technical descriptions; and details are not described herein), and after two TTIs (or slots) pass, sends, to the terminal device in a TTI 11 (or a slot 11), DCI for scheduling a PDSCH; and then sends the PDSCH in a TTI 12. In this process, 11 TTIs (or slots) pass from time at which scheduling is completed to time at which the PDSCH is sent. In other words, a scheduling delay is 11 TTIs (or slots). If the first network device starts scheduling in a TTI 3 (or a slot 3), the first network device completes L1 processing in a TTI 13 (or a slot 13). Then, the first network device waits one uplink slot (which cannot be used to send the DCI), and sends the PDSCH after sending the DCI in a downlink slot (namely, a TTI 15). In this case, a scheduling delay is 12 TTIs (or slots). It should be understood that FIG. 4 shows only one time of BH interaction. In an actual system, all network devices in coordinated transmission may need to perform BH interaction for a plurality of times, to coordinate scheduling information. Therefore, an actual scheduling delay is longer.

When scheduling is performed in the scheduling manner in this application, if a first network device starts scheduling in a TTI 1 (or a slot 1), the first network device sends, in a TTI 2 (or a slot 2), DCI that carries first scheduling information, and a terminal device forwards, on an uplink time-frequency resource in a TTI 3 (or a slot 3), UCI that carries the first scheduling information. After detecting the UCI, the network device performs L1 processing through two TTIs (or slots), and respectively sends, in a TTI 6 (or a slot 6) and a TTI 7 (or a slot 7), DCI for scheduling a PDSCH and the PDSCH. In this case, a scheduling delay is five TTIs (or slots). If the first network device starts scheduling in a TTI 3 (or a slot 3), because a TTI 4 (or a slot 4) is an uplink slot, the first network device delivers, in a TTI 5 (or a slot 5), the DCI that carries the first scheduling information. Because the TTI 6 (or the slot 6) and the TTI 7 (or the slot 7) are downlink slots, the terminal device forwards, in a TTI 8 (or a slot 8), the UCI that carries the first scheduling information. After detecting the UCI, the first network device performs L1 processing through two TTIs (or slots), sends the DCI in a downlink slot (namely, a TTI 11), and sends the PDSCH in a TTI 12 (or a slot 12). In this case, a scheduling delay is eight TTIs (or slots).

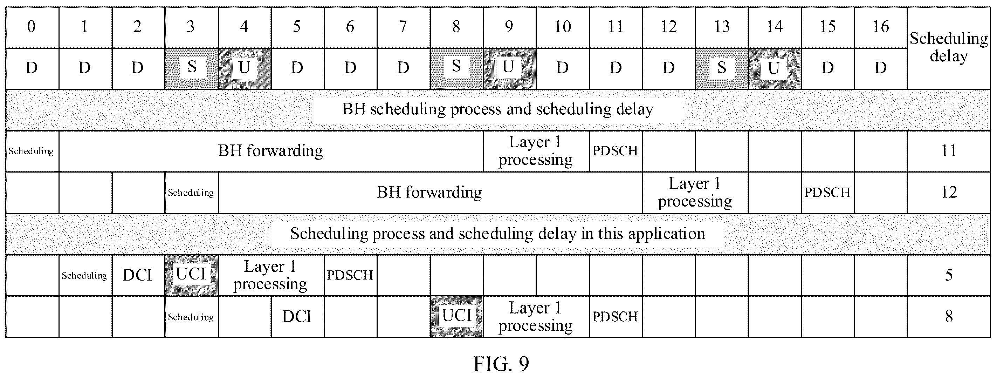

FIG. 9 is a diagram of an interaction delay comparison result between a second data scheduling method for coordinated transmission and a scheduling manner of coordinated transmission performed based on BH interaction according to an embodiment of this application. In this case, when DCI and a PDSCH scheduled based on the DCI are sent in a same slot (or a TTI), compared with FIG. 4, in FIG. 9, both the DCI and the PDSCH scheduled based on the DCI are sent in a slot 11.

It should be understood that in an FDD communication system, because there is no concept of a downlink-to-uplink time ratio, when a data scheduling method for coordinated transmission in this application is used, a terminal device does not need to wait to receive, in a downlink slot, DCI that carries first scheduling information, and receives, after scheduling is completed, DCI that carries the first scheduling information and that is sent by a first network device. Then, the terminal device may forward, on an uplink time-frequency resource, UCI that carries the first scheduling information, and does not need to wait to send the UCI in a next uplink slot either. In conclusion, compared with a TDD system, in the FDD communication system, the data scheduling method for coordinated transmission provided in this application further reduces an interaction delay.

It should be understood that FIG. 4 provides descriptions of a comparison result of CJT in coordinated transmission.

In conclusion, it can be learned from FIG. 4 that the interaction delay can be reduced according to the solution provided in this application.

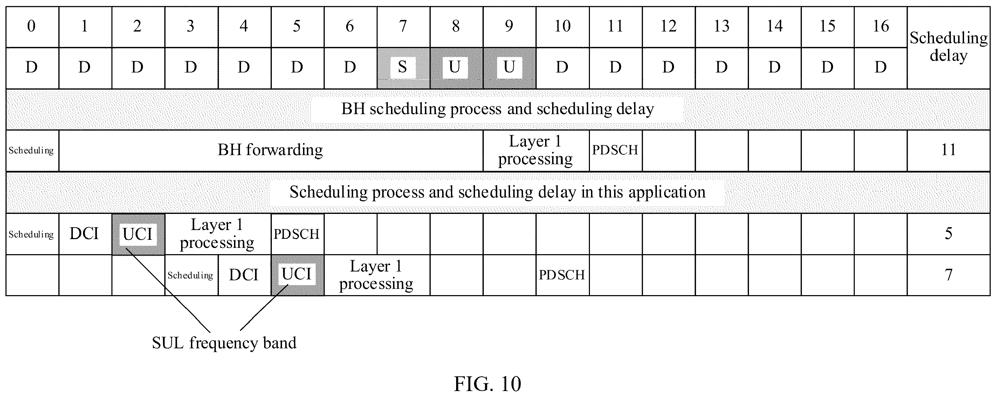

FIG. 10 is a diagram of an interaction delay comparison result between a third data scheduling method for coordinated transmission and a scheduling manner of coordinated transmission performed based on BH interaction according to an embodiment of this application. FIG. 10 provides descriptions by using an example in which an SUL frequency band carries UCI in a TDD communication system. In the TDD system, a downlink-to-uplink slot configuration is 8:2, a subcarrier spacing is 30 kHz, and a slot length is 0.5 ms.

Specifically, in FIG. 10, in a CJT scheduling manner based on BH interaction, it is considered that a typical BH delay is 4 ms. If a first network device performs scheduling in a slot 0, the first network device exchanges scheduling information with another coordinated network device in a slot 8, and the another coordinated network device and the first network device start L1 processing in a slot 9, and send a PDSCH in a slot 11 after two slots pass. In this process, 11 slots pass from time at which the first network device completes scheduling to time at which the PDSCH is sent. In other words, a scheduling delay is 11 slots.

However, in the solution of this application, in a case, if a first network device performs scheduling in a slot 0, and sends, in a slot 1, DCI that carries an initial scheduling result, after receiving the DCI, a terminal device performs processing, generates UCI that carries a to-be-forwarded scheduling result, and forwards the UCI to all coordinated network devices (including the first network device) in a slot 2 on an SUL frequency band. After detecting the UCI, all the coordinated network devices perform L1 processing through two slots, and send a PDSCH in a slot 5. In this case, a scheduling delay is five slots. It may be understood that when the terminal device does not send the UCI on the SUL frequency band (for example, the SUL frequency band is not configured in a system, or the SUL frequency band is configured but is not used), the terminal device sends the UCI in an uplink slot of the system (that is, an uplink time-frequency resource that carries the UCI is located on a frequency band that carries the DCI). In this case, the UCI is sent in a slot 7 in FIG. 10. Subsequently, all the coordinated network devices send the PDSCH in a slot 10. A scheduling delay is 10 slots. Therefore, compared with the scheduling manner of coordinated transmission of BH interaction, when the UCI is sent on the SUL frequency band, the scheduling delay can be greatly reduced. In addition, when the SUL frequency band is configured in the TDD system, the SUL frequency band may be preferentially selected to send the UCI, to further reduce the scheduling delay.

In another case, if a first network device starts scheduling in a slot 3 and sends, in a slot 4, DCI that carries an initial scheduling result, a terminal device forwards, to all coordinated network devices (including the first network device) in a slot 5 on an SUL frequency band, generated UCI that carries a to-be-forwarded scheduling result, and all the coordinated network devices send a PDSCH in a slot 10 after performing L1 processing through two slots. In this case, a scheduling delay is seven slots. It can be learned that compared with the scheduling manner of coordinated transmission of BH interaction, when the UCI is sent on the SUL frequency band, the scheduling delay can be reduced.

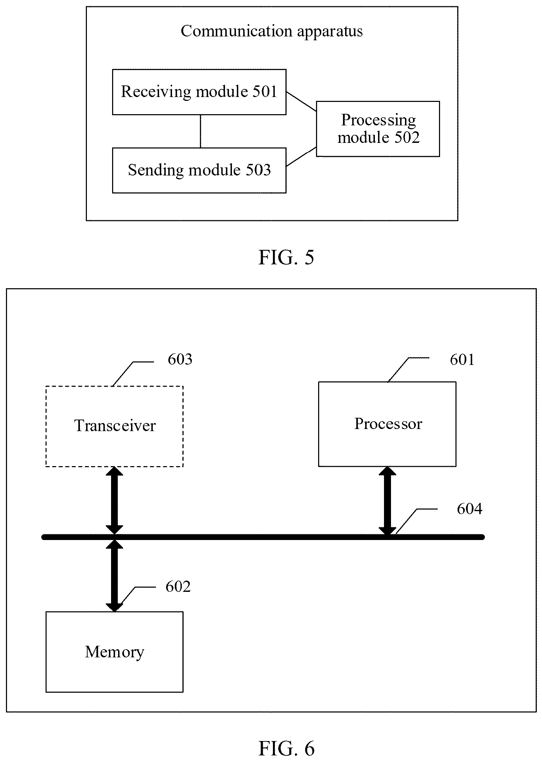

FIG. 5 is a schematic block diagram of a data scheduling apparatus 500 for coordinated transmission according to an embodiment of this application. The apparatus 500 includes a receiving module 501, and the receiving module 501 may be configured to implement a corresponding receiving function. The receiving module 501 may also be referred to as a receiving unit.

The apparatus 500 further includes a processing module 502, and the processing module 502 may be configured to implement a corresponding processing function.

The apparatus 500 further includes a sending module 503. The sending module 503 may be configured to implement a corresponding sending function, and the sending module 503 may also be referred to as a sending unit.

Optionally, the apparatus 500 further includes a storage unit. The storage unit may be configured to store instructions and/or data. The processing module 502 may read the instructions and/or the data in the storage unit, so that the apparatus implements actions of a related apparatus in the foregoing method embodiments.

The apparatus 500 may be configured to perform an action performed by the terminal device, the first network device, or a network device, for example, the second network device, other than the first network device in the foregoing method embodiments. In this case, the apparatus 500 may be a constituent part of the terminal device, the first network device, or the network device other than the first network device. The receiving module 501 is configured to perform a receiving-related operation of the terminal device, the first network device, or the network device other than the first network device in the foregoing method embodiments. The processing module 502 is configured to perform a processing-related operation of the terminal device, the first network device, or the network device other than the first network device in the foregoing method embodiments. The sending module 503 is configured to perform a sending-related operation of the terminal device, the first network device, or the network device other than the first network device in the foregoing method embodiments.

In a design, the apparatus 500 is configured to perform an action performed by any network element or any device in the foregoing method embodiments (the method 200 and the method 300). In an embodiment, the data scheduling apparatus for coordinated transmission may be configured to perform an operation of the terminal device in FIG. 2 or FIG. 3. An example is as follows:
The receiving module 501 is configured to receive first scheduling information from a first network device. The first scheduling information includes a first time-frequency resource, a first modulation and coding scheme MCS order, and a first transport layer quantity; and is further configured to: receive N pieces of first DCI from N network devices, where each of the N pieces of first DCI includes the first scheduling information; and when the first scheduling information is used to schedule downlink data, receive, on the first time-frequency resource, same downlink data sent by the N network devices, where N is an integer greater than 1.

Optionally, the first scheduling information received by the receiving module 501 may be carried in second DCI. It should be understood that the second DCI is different from the first DCI sent by the N network devices, and the second DCI carries pre-scheduling information sent by the first network device to the terminal device.

The sending module 503 is configured to send the first scheduling information; and is further configured to send uplink data on the first time-frequency resource when the first scheduling information is used to schedule the uplink data.

Optionally, the first scheduling information sent by the sending module 503 may be carried in predefined UCI.

It should be understood that a specific process in which the modules perform the corresponding steps is described in detail in the method embodiments. For brevity, details are not described herein again.

In addition, the receiving module 501, the processing module 502, and the sending module 503 in the data scheduling apparatus for coordinated transmission may further implement other operations or functions of the terminal device in the foregoing methods. Details are not described herein again.

Optionally, the data scheduling apparatus 500 for coordinated transmission may be a device including the terminal device. Alternatively, the data scheduling apparatus 500 for coordinated transmission may be a component configured in a terminal device, for example, a chip in the terminal device. In this case, the receiving module 501 and the sending module 503 may be an interface circuit, a pin, or the like. Specifically, the interface circuit may include an input circuit and an output circuit. The receiving module 501 may include an input circuit, the sending module 503 may include an output circuit, and the processing module 502 may include a processing circuit.

In another embodiment, the data scheduling apparatus for coordinated transmission may be configured to perform an operation of the first network device in FIG. 2 or FIG. 3. An example is as follows:
The receiving module 501 is configured to receive first scheduling information from a terminal device. The first scheduling information includes a first time-frequency resource, a first modulation and coding scheme MCS order, and a first transport layer quantity; and when the first scheduling information is used to schedule uplink data, receive, on the first time-frequency resource, uplink data sent by the terminal device.

Optionally, the first scheduling information received by the receiving module 501 may be carried in predefined UCI.

The sending module 503 is configured to send the first scheduling information to the terminal device. The sending module 503 is further configured to: send first DCI to the terminal device, and send downlink data to the terminal device on the first time-frequency resource when the first scheduling information is used to schedule the downlink data.

Optionally, the first scheduling information sent by the sending module 503 may be carried in second DCI.

In addition, the receiving module 501, the processing module 502, and the sending module 503 in the data scheduling apparatus for coordinated transmission may further implement other operations or functions of the first network device in the foregoing methods. Details are not described herein again.

Optionally, the data scheduling apparatus 500 for coordinated transmission may be a device including the first network device. Alternatively, the data scheduling apparatus 500 for coordinated transmission may be a component configured in the first network device, for example, a chip in the first network device. In this case, the receiving module 501 and the sending module 503 may be an interface circuit, a pin, or the like. Specifically, the interface circuit may include an input circuit and an output circuit. The receiving module 501 may include an input circuit, the sending module 503 may include an output circuit, and the processing module 502 may include a processing circuit.

It should be understood that a specific process in which the modules perform the corresponding steps is described in detail in the method embodiments. For brevity, details are not described herein again.

In another embodiment, the data scheduling apparatus for coordinated transmission may be configured to perform an operation of the network device, for example, the second network device, other than the first network device in FIG. 2 or FIG. 3. An example is as follows:
The receiving module 501 is configured to receive first scheduling information from a terminal device. The first scheduling information includes a first time-frequency resource, a first modulation and coding scheme MCS order, and a first transport layer quantity. The receiving module 501 is further configured to: when the first scheduling information is used to schedule uplink data, receive, on the first time-frequency resource, uplink data sent by the terminal device.

Optionally, the first scheduling information received by the receiving module 501 may be carried in predefined UCI.

The sending module 503 is configured to send first DCI to the terminal device, where the first DCI includes the first scheduling information; and is further configured to send the downlink data to the terminal device on the first time-frequency resource when the first scheduling information is used to schedule the downlink data.

In addition, the receiving module 501, the processing module 502, and the sending module 503 in the data scheduling apparatus for coordinated transmission may further implement other operations or functions of the network device other than the first network device in the foregoing methods. Details are not described herein again.

Optionally, the data scheduling apparatus 500 for coordinated transmission may be a device including the network device other than the first network device. Alternatively, the data scheduling apparatus 500 for coordinated transmission may be a component configured in the network device other than the first network device, for example, a chip in the second network device. In this case, the receiving module 501 and the sending module 503 may be an interface circuit, a pin, or the like. Specifically, the interface circuit may include an input circuit and an output circuit. The receiving module 501 may include an input circuit, the sending module 503 may include an output circuit, and the processing module 502 may include a processing circuit.

It should be understood that a specific process in which the modules perform the corresponding steps is described in detail in the method embodiments. For brevity, details are not described herein again.

FIG. 6 is a diagram of a structure of another data scheduling apparatus for coordinated transmission according to an embodiment of this application. A data scheduling apparatus 600 for coordinated transmission includes a processor 601. As shown in FIG. 6, the data scheduling apparatus 600 for coordinated transmission may further include at least one memory 602, configured to store a computer program or instructions and/or data. The memory 602 is coupled to the processor 601. The processor 601 is configured to execute the computer program or the instructions and/or the data stored in the memory 602, so that the methods (the method 200 and the method 300) in the foregoing method embodiments are performed. The coupling in this embodiment of this application may be an indirect coupling or a communication connection between apparatuses, units, or modules in an electrical form, a mechanical form, or another form, and is used for information exchange between the apparatuses, the units, or the modules. The processor 601 may cooperate with the memory 602. At least one of the at least one memory 602 may be included in the processor 601.

Optionally, the data scheduling apparatus 600 for coordinated transmission includes one or more processors 601.

Optionally, the memory 602 may be integrated with the processor 601, or separately disposed.

The data scheduling apparatus 600 for coordinated transmission may further include a transceiver 603, configured to perform data scheduling for coordinated transmission with another device by using a transmission medium, so that the apparatus and the another device can perform data scheduling for coordinated transmission. Optionally, the transceiver 603 may be an interface, a bus, a circuit, or an apparatus that can implement a transceiver function.

Optionally, a component that is in the transceiver 603 and that is configured to implement a receiving function may be considered as a receiving module, and a component that is in the transceiver 603 and that is configured to implement a sending function may be considered as a sending module. That is, the transceiver 603 includes a receiver and a transmitter.

A specific connection medium between the processor 601, the memory 602, and the transceiver 603 is not limited in this embodiment of this application. In this embodiment of this application, the processor 601, the memory 602, and the transceiver 603 are connected through a bus 604 in FIG. 6. **In** FIG. 6, the bus is indicated by a bold line. A connection manner between other components is merely described as an example, and is not limited thereto. The bus may be classified into an address bus, a data bus, a control bus, and the like.

It should be understood that, for ease of representation, only one thick line is used to represent the bus in FIG. 6, but this does not mean that there is only one bus or only one type of bus.

Optionally, as shown in FIG. 6, the data scheduling apparatus 600 for coordinated transmission may further include a transceiver 603 and/or a communication interface. The transceiver 603 and/or the communication interface are/is configured to receive and/or send a signal. For example, the processor 601 is configured to control the transceiver 603 and/or the communication interface to receive and/or send a signal.

The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitter, a transmitting module, a transmitting circuit, or the like.

For example, in an embodiment, the processor 601 is configured to perform another operation or function of a terminal device. The transceiver 603 is configured to implement data scheduling for coordinated transmission between the data scheduling apparatus for coordinated transmission and a network device.

In another embodiment, the processor 601 is configured to perform another operation or function of the first network device. The transceiver 603 is configured to implement data scheduling for coordinated transmission between the data scheduling apparatus for coordinated transmission and a terminal device.

In still another embodiment, the processor 601 is configured to perform another operation or function of a network device other than the first network device. The transceiver 603 is configured to implement data scheduling for coordinated transmission between the data scheduling apparatus for coordinated transmission and a terminal device.

One or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may include but is not limited to, at least one of the following types: a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in an SoC (system on a chip) or an application-specific integrated circuit (application-specific integrated circuit, ASIC), or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or without software to execute the foregoing method procedure.

When the foregoing modules or units are implemented by using software, all or some of the foregoing modules or units may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

An embodiment of this application provides a data scheduling apparatus 700 for coordinated transmission. The apparatus 700 may be a network device (a first network device or a network device other than the first network device), or may be a chip. The apparatus 700 may be configured to perform an operation performed by the network device in the foregoing method embodiments (the method 200 and the method 300).

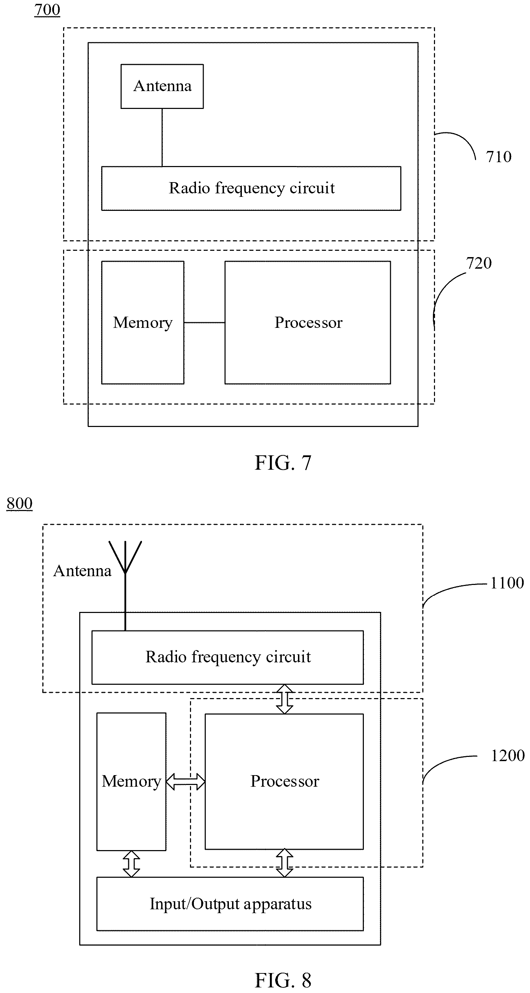

When the data scheduling apparatus 700 for coordinated transmission is a network device, FIG. 7 is a diagram of a simplified structure of a network device. The network device includes a part 710 and a part 720. The part 710 includes an antenna and a radio frequency circuit. The antenna is mainly configured to receive and send a radio frequency signal, and the radio frequency circuit is mainly configured to perform conversion between a radio frequency signal and a baseband signal. The part 720 includes a memory and a processor, and is mainly configured to: perform baseband processing, control a network device, and the like. The part 710 may be usually referred to as a transceiver unit, a transceiver machine, a transceiver circuit, a transceiver, or the like. The part 720 is usually a control center of the network device, may be usually referred to as a processing unit, and is configured to control the network device to perform a processing operation on a network device side in the foregoing method embodiments.

Optionally, a component that is in the part 710 and that is configured to implement a receiving function may be considered as a receiving unit, and a component configured to implement a sending function may be considered as a sending unit. **In** other words, the part 710 includes the receiving unit and the sending unit. The receiving unit may also be referred to as a receiver, a receiver machine, a receiver circuit, or the like. The sending unit may be referred to as a transmitter, a transmitter machine, a transmitter circuit, or the like.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the network device, the radio frequency circuit receives a radio frequency signal through the antenna, converts the radio frequency signal into a baseband signal, and outputs the baseband signal to the processor. The processor converts the baseband signal into data, and processes the data.

The part 720 may include one or more boards, and each board may include one or more processors and one or more memories. For ease of description, only one memory and one processor are shown in FIG. 7. The processor is configured to read and execute a program in the memory to implement a baseband processing function and control the network device. If there are a plurality of boards, the boards may be interconnected with each other, to enhance a processing capability. In an optional implementation, the plurality of boards may share one or more processors, or the plurality of boards share one or more memories.

It should be understood that FIG. 7 is merely an example rather than a limitation. The network device including the transceiver unit and the processing unit may not rely on the structure shown in FIG. 7.

When the data scheduling apparatus 700 for coordinated transmission is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides another data scheduling apparatus 800 for coordinated transmission. The apparatus 800 may be a terminal device, or may be a chip. The apparatus 800 may be configured to perform an operation performed by the terminal device in the foregoing method embodiments (the method 200 and the method 300).

When the data scheduling apparatus 800 for coordinated transmission is a terminal device, FIG. 8 is a diagram of a simplified structure of a terminal device. As shown in FIG. 8, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 8, the terminal device includes a transceiver unit 1100 and a processing unit 1200. The transceiver unit 1100 may also be referred to as a transceiver, a transceiver machine, a transceiver apparatus, a transceiver circuit, or the like. The processing unit 1200 may also be referred to as a processor, a processing board, a processing module, a processing apparatus, or the like.

Optionally, a component that is in the transceiver unit 1100 and that is configured to implement the receiving function may be considered as a receiving unit, and a component that is in the transceiver unit 1100 and that is configured to implement the sending function may be considered as a sending unit. That is, the transceiver unit 1100 includes the receiving unit and the sending unit. The receiving unit may also be referred to as a receiver machine, a receiver, a receiving apparatus, a receiver circuit, or the like. The sending unit may also be referred to as a transmitter machine, a transmitter, a transmitting apparatus, a transmitting circuit, or the like.

It should be understood that FIG. 8 is merely an example rather than a limitation. The terminal device including the transceiver unit and the processing unit may not rely on the structure shown in FIG. 8.

When the data scheduling apparatus 800 for coordinated transmission is a chip, the chip includes a transceiver unit and a processing unit. The transceiver unit may be an input/output circuit or a communication interface. The processing unit may be a processor, a microprocessor, or an integrated circuit integrated on the chip.

According to the method provided in embodiments of this application, this application further provides a computer program product. The computer program product includes: computer program code. When the computer program code is run on a computer, the computer is enabled to perform a method of a terminal device in the foregoing method embodiments.

According to the method provided in embodiments of this application, this application further provides a computer program product. The computer program product includes: computer program code. When the computer program code is run on a computer, the computer is enabled to perform a method of a first network device in the foregoing method embodiments.

According to the method provided in embodiments of this application, this application further provides a computer program product. The computer program product includes computer program code. When the computer program code is run on a computer, the computer is enabled to perform a method of a network device other than a first network device in the foregoing method embodiments.

According to the method provided in embodiments of this application, this application further provides a computer-readable medium. The computer-readable medium stores program code. When the program code is run on a computer, the computer is enabled to perform a method of a terminal device in the foregoing method embodiments.

According to the method provided in embodiments of this application, this application further provides a computer-readable medium. The computer-readable medium stores program code. When the program code is run on a computer, the computer is enabled to perform a method of a first network device in the foregoing method embodiments.

According to the method provided in embodiments of this application, this application further provides a computer-readable medium. The computer-readable medium stores program code. When the program code is run on a computer, the computer is enabled to perform a method of a network device other than a first network device in the foregoing method embodiments.

An embodiment of this application further provides a processing apparatus, including a processor and an interface. The processor is configured to perform a data scheduling method for coordinated transmission according to any one of the foregoing method embodiments.

An embodiment of this application further provides a data scheduling system for coordinated transmission. The system includes the first network device, another network device, and a terminal device in the foregoing embodiments.

Terminologies such as "component", "module", and "system" used in this specification are used to indicate computer-related entities, hardware, firmware, combinations of hardware and software, software, or software being executed. For example, the component may be but is not limited to a process that runs on a processor, the processor, an object, an executable file, an execution thread, a program, and/or a computer. As illustrated by using figures, both a computing device and an application that runs on the computing device may be components. One or more components may reside within the process and/or the execution thread, and the component may be located on one computer and/or distributed between two or more computers. **In** addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the internet interacting with another system by using the signal).

A person of ordinary skill in the art may be aware that, in combination with illustrative logical blocks (illustrative logical block) and steps (step) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be understood that, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application.

## Claims

1. A data scheduling method for coordinated transmission applied to a terminal device (101, 800), comprising:
receiving first scheduling information from a first network device (102, 700), wherein the first scheduling information comprises a first time-frequency resource, a first modulation and coding scheme, MCS, order, and a first transport layer quantity;
sending the first scheduling information to N network devices (102, 103);
receiving N pieces of first downlink control information, DCI, from the N network devices (102, 103), wherein each of the N pieces of first DCI comprises the first scheduling information; and
receiving data, on the first time-frequency resource, from the N network devices (102, 103) or transmitting data, on the first time-frequency resource, to the N network devices (102, 103), wherein the N network devices (102, 103) comprise the first network device (102, 700), and N is an integer greater than 1.

2. The method according to claim 1, wherein the receiving first scheduling information from a first network device (102, 700) comprises:
receiving second DCI from the first network device (102, 700), wherein the second DCI comprises the first scheduling information.

3. The method according to claim 2, wherein the second DCI comprises first indication information, and the first indication information indicates that the first scheduling information is to be forwarded by the terminal device (101, 800).

4. The method according to claim 2 or 3, wherein the second DCI comprises second indication information, and the second indication information indicates that the first scheduling information is scheduling information used for coherent joint transmission, CJT, or scheduling information used for coherent joint reception, CJR.

5. The method according to any one of claims 1 to 4, wherein the sending the first scheduling information comprises:
sending uplink control information, UCI, wherein the UCI comprises the first scheduling information.

6. The method according to claim 5, wherein
the UCI is carried on an uplink time-frequency resource, and the uplink time-frequency resource is a time-frequency resource scheduled in a static or semi-static manner.

7. A data scheduling method for coordinated transmission applied to a first network device (102, 700), among N network devices (102, 103), comprising:
sending first scheduling information to a terminal device (101, 800), wherein the first scheduling information comprises a first time-frequency resource, a first modulation and coding scheme, MCS, order, and a first transport layer quantity;
receiving the first scheduling information sent by the terminal device (101, 800) to the N network devices (102, 103), after sending the first scheduling information to the terminal device (101, 800);
sending to the terminal device (101, 800), one of N pieces of first downlink control information, DCI, wherein each of the N pieces of first DCI comprises the first scheduling information; and
receiving data, on the first time-frequency resource, from the terminal device (101, 800) or transmitting data, on the first time-frequency resource, to the terminal device (101, 800),
wherein the N network devices comprise the first network device, and N is an integer greater than 1.

8. The method according to claim 7, wherein the sending first scheduling information to a terminal device (101, 800) comprises:
sending second DCI to the terminal device (101, 800), wherein the second DCI comprises the first scheduling information.

9. The method according to claim 8, wherein the second DCI comprises first indication information, and the first indication information indicates that the first scheduling information is to be forwarded by the terminal device (101, 800).

10. The method according to claim 8 or 9, wherein the second DCI comprises second indication information, and the second indication information indicates that the first scheduling information is scheduling information used for coherent joint transmission, CJT, or scheduling information used for coherent joint reception, CJR.

11. The method according to any one of claims 7 to 10, wherein the receiving the first scheduling information from the terminal device (101, 800) comprises:
receiving uplink control information, UCI, from the terminal device (101, 800), wherein the UCI comprises the first scheduling information.

12. The method according to claim 11, wherein
the UCI is carried on an uplink time-frequency resource, and the uplink time-frequency resource is a time-frequency resource scheduled by the first network device (102, 700) for the terminal device (101, 800) in a static or semi-static manner.

13. A data scheduling apparatus (500, 600, 700, 800) for coordinated transmission, wherein the apparatus (500, 600, 700, 800) comprises a processor (601), the processor (601) is coupled to a memory (602), the memory (602) stores instructions, and when the instructions are run by the processor (601),
the processor (601) is enabled to perform the method according to any one of claims 1 to 6, or
the processor (601) is enabled to perform the method according to any one of claims 7 to 12.

14. A computer-readable storage medium, wherein the computer-readable storage medium is configured to store a computer program, and when the computer program is run on a computer, the computer is enabled to perform the method according to any one of claims 1 to 6, or the computer is enabled to perform the method according to any one of claims 7 to 12.

15. A computer program product, wherein the computer program product comprises computer program code, and when the computer program code is run, the method according to any one of claims 1 to 6 or the method according to any one of claims 7 to 12 is implemented.

## Patentansprüche

1. Datenplanungsverfahren für koordinierte Übertragung, angewendet auf eine Endgeräteeinrichtung (101, 800), umfassend:
Empfangen erster Planungsinformationen von einer ersten Netzeinrichtung (102, 700), wobei die ersten Planungsinformationen eine erste Zeit-Frequenz-Ressource, eine erste Modulations- und Codierungsschema-Ordnung, MCS-Ordnung, und eine erste Transportschichtmenge umfassen;
Senden der ersten Planungsinformationen an N Netzeinrichtungen (102, 103);
Empfangen von N Elementen erster Downlink-Steuerinformationen, DCI, von den N Netzeinrichtungen (102, 103), wobei jedes der N Elemente erster DCI die ersten Planungsinformationen umfasst; und
Empfangen von Daten, auf der ersten Zeit-Frequenz-Ressource, von den N Netzeinrichtungen (102, 103) oder Übertragen von Daten, auf der ersten Zeit-Frequenz-Ressource, an die N Netzeinrichtungen (102, 103), wobei die N Netzeinrichtungen (102, 103) die erste Netzeinrichtung (102, 700) umfassen und N eine Ganzzahl größer 1 ist.

2. Verfahren nach Anspruch 1, wobei das Empfangen erster Planungsinformationen von einer ersten Netzeinrichtung (102, 700) Folgendes umfasst:
Empfangen zweiter DCI von der ersten Netzeinrichtung (102, 700), wobei die zweiten DCI die ersten Planungsinformationen umfassen.

3. Verfahren nach Anspruch 2, wobei die zweiten DCI erste Angabeinformationen umfassen und die ersten Angabeinformationen angeben, dass die ersten Planungsinformationen durch die Endgeräteeinrichtung (101, 800) weiterzuleiten sind.

4. Verfahren nach Anspruch 2 oder 3, wobei die zweiten DCI zweite Angabeinformationen umfassen und die zweiten Angabeinformationen angeben, dass es sich bei den ersten Planungsinformationen um Planungsinformationen, die für kohärente gemeinsame Übertragung, CJT, verwendet werden, oder um Planungsinformationen, die für kohärenten gemeinsamen Empfang, CJR, verwendet werden, handelt.

5. Verfahren nach einem der Ansprüche 1 bis 4, wobei das Senden der ersten Planungsinformationen Folgendes umfasst:
Senden von Uplink-Steuerinformationen, UCI, wobei die UCI die ersten Planungsinformationen umfassen.

6. Verfahren nach Anspruch 5, wobei
die UCI auf einer Uplink-Zeit-Frequenz-Ressource enthalten sind und die Uplink-Zeit-Frequenz-Ressource eine Zeit-Frequenz-Ressource ist, die in einer statischen oder semistatischen Weise geplant ist.

7. Datenplanungsverfahren für koordinierte Übertragung, angewendet auf eine erste Netzeinrichtung (102, 700) unter N Netzeinrichtungen (102, 103), umfassend:
Senden erster Planungsinformationen an eine Endgeräteeinrichtung (101, 800), wobei die ersten Planungsinformationen eine erste Zeit-Frequenz-Ressource, eine erste Modulations- und Codierungsschema-Ordnung, MCS-Ordnung, und eine erste Transportschichtmenge umfassen;
Empfangen der ersten Planungsinformationen, die durch die Endgeräteeinrichtung (101, 800) an die N Netzeinrichtungen (102, 103) gesendet werden, nachdem die ersten Planungsinformationen an die Endgeräteeinrichtung (101, 800) gesendet wurden;
Senden, an die Endgeräteeinrichtung (101, 800), eines von N Elementen erster Downlink-Steuerinformationen, DCI, wobei jedes der N Elemente erster DCI die ersten Planungsinformationen umfasst; und
Empfangen von Daten, auf der ersten Zeit-Frequenz-Ressource, von der Endgeräteeinrichtung (101, 800) oder Übertragen von Daten,
auf der ersten Zeit-Frequenz-Ressource, an die Endgeräteeinrichtung (101, 800), wobei die N Netzeinrichtungen die erste Netzeinrichtung umfassen und N eine Ganzzahl größer 1 ist.

8. Verfahren nach Anspruch 7, wobei das Senden erster Planungsinformationen an eine Endgeräteeinrichtung (101, 800) Folgendes umfasst:
Senden zweiter DCI an die Endgeräteeinrichtung (101, 800), wobei die zweiten DCI die ersten Planungsinformationen umfassen.

9. Verfahren nach Anspruch 8, wobei die zweiten DCI erste Angabeinformationen umfassen und die ersten Angabeinformationen angeben, dass die ersten Planungsinformationen durch die Endgeräteeinrichtung (101, 800) weiterzuleiten sind.

10. Verfahren nach Anspruch 8 oder 9, wobei die zweiten DCI zweite Angabeinformationen umfassen und die zweiten Angabeinformationen angeben, dass es sich bei den ersten Planungsinformationen um Planungsinformationen, die für kohärente gemeinsame Übertragung, CJT, verwendet werden, oder um Planungsinformationen, die für kohärenten gemeinsamen Empfang, CJR, verwendet werden, handelt.

11. Verfahren nach einem der Ansprüche 7 bis 10, wobei das Empfangen der ersten Planungsinformationen von der Endgeräteeinrichtung (101, 800) Folgendes umfasst:
Empfangen von Uplink-Steuerinformationen, UCI, von der Endgeräteeinrichtung (101, 800), wobei die UCI die ersten Planungsinformationen umfassen.

12. Verfahren nach Anspruch 11, wobei
die UCI auf einer Uplink-Zeit-Frequenz-Ressource enthalten sind und die Uplink-Zeit-Frequenz-Ressource eine Zeit-Frequenz-Ressource ist, die durch die erste Netzeinrichtung (102, 700) für die Endgeräteeinrichtung (101, 800) auf eine statische oder semistatische Weise geplant wird.

13. Datenplanungsvorrichtung (500, 600, 700, 800) für koordinierte Übertragung, wobei die Vorrichtung (500, 600, 700, 800) einen Prozessor (601) umfasst, der Prozessor (601) mit einem Speicher (602) gekoppelt ist, der Speicher (602) Anweisungen speichert und, wenn die Anweisungen durch den Prozessor (601) ausgeführt werden,
der Prozessor (601) in die Lage versetzt wird, das Verfahren nach einem der Ansprüche 1 bis 6 durchzuführen, oder
der Prozessor (601) in die Lage versetzt wird, das Verfahren nach einem der Ansprüche 7 bis 12 durchzuführen.

14. Computerlesbares Speichermedium, wobei das computerlesbare Speichermedium dazu konfiguriert ist, ein Computerprogramm zu speichern, und, wenn das Computerprogramm auf einem Computer ausgeführt wird, der Computer in die Lage versetzt wird, das Verfahren nach einem der Ansprüche 1 bis 6 durchzuführen, oder der Computer in die Lage versetzt wird, das Verfahren nach einem der Ansprüche 7 bis 12 durchzuführen.

15. Computerprogrammprodukt, wobei das Computerprogrammprodukt Computerprogrammcode umfasst und, wenn der Computerprogrammcode ausgeführt wird, das Verfahren nach einem der Ansprüche 1 bis 6 oder das Verfahren nach einem der Ansprüche 7 bis 12 implementiert wird.

## Revendications

1. Procédé de planification de données pour transmission coordonnée appliqué à un dispositif terminal (101, 800), comprenant :
la réception de premières informations d'ordonnancement à partir d'un premier dispositif réseau (102, 700), dans lequel les premières informations d'ordonnancement comprennent une première ressource temps-fréquence, un premier ordre de schéma de modulation et de codage, MCS, et une première quantité de couche transport ;
l'envoi des premières informations d'ordonnancement à N dispositifs réseau (102, 103) ;
la réception de N éléments de premières informations de commande de liaison descendante, DCI, à partir des N dispositifs réseau (102, 103), dans lequel chacun des N éléments de premières DCI comprend les premières informations d'ordonnancement ; et
la réception de données, sur la première ressource temps-fréquence, à partir des N dispositifs réseau (102, 103) ou la transmission de données, sur la première ressource temps-fréquence, aux N dispositifs réseau (102, 103), dans lequel les N dispositifs réseau (102, 103) comprennent le premier dispositif réseau (102, 700), et N est un entier supérieur à 1.

2. Procédé selon la revendication 1, dans lequel la réception de premières informations d'ordonnancement à partir d'un premier dispositif réseau (102, 700) comprend :
la réception de secondes DCI à partir du premier dispositif réseau (102, 700), dans lequel les secondes DCI comprennent les premières informations d'ordonnancement.

3. Procédé selon la revendication 2, dans lequel les secondes DCI comprennent des premières informations d'indication, et les premières informations d'indication indiquent que les premières informations d'ordonnancement doivent être transmises par le dispositif terminal (101, 800).

4. Procédé selon la revendication 2 ou 3, dans lequel les secondes DCI comprennent des secondes informations d'indication, et les secondes informations d'indication indiquent que les premières informations d'ordonnancement sont des informations d'ordonnancement utilisées pour la transmission conjointe cohérente, CJT, ou des informations d'ordonnancement utilisées pour la réception conjointe cohérente, CJR.

5. Procédé selon l'une quelconque des revendications 1 à 4, dans lequel l'envoi des premières informations d'ordonnancement comprend :
l'envoi d'informations de commande de liaison montante, UCI, dans lequel les UCI comprennent les premières informations d'ordonnancement.

6. Procédé selon la revendication 5, dans lequel les UCI sont transportées sur une ressource temps-fréquence de liaison montante, et la ressource temps-fréquence de liaison montante est une ressource temps-fréquence planifiée de manière statique ou semi-statique.

7. Procédé de planification de données pour transmission coordonnée appliqué à un premier dispositif réseau (102, 700), parmi N dispositifs réseau (102, 103), comprenant :
l'envoi de premières informations d'ordonnancement à un dispositif terminal (101, 800), dans lequel les premières informations d'ordonnancement comprennent une première ressource temps-fréquence, un premier ordre de schéma de modulation et de codage, MCS, et une première quantité de couche transport ;
la réception des premières informations d'ordonnancement envoyées par le dispositif terminal (101, 800) aux N dispositifs réseau (102, 103), après l'envoi des premières informations d'ordonnancement au dispositif terminal (101, 800) ;
l'envoi au dispositif terminal (101, 800) de l'un des N éléments de premières informations de commande de liaison descendante, DCI, dans lequel chacun des N éléments de premières DCI comprend les premières informations d'ordonnancement ; et
la réception de données, sur la première ressource temps-fréquence, à partir du dispositif terminal (101, 800) ou la transmission de données, sur la première ressource temps-fréquence, au dispositif terminal (101, 800),
dans lequel les N dispositifs réseau comprennent le premier dispositif réseau, et N est un entier supérieur à 1.

8. Procédé selon la revendication 7, dans lequel l'envoi de premières informations d'ordonnancement à un dispositif terminal (101, 800) comprend :
l'envoi de secondes DCI au dispositif terminal (101, 800), dans lequel les secondes DCI comprennent les premières informations d'ordonnancement.

9. Procédé selon la revendication 8, dans lequel les secondes DCI comprennent des premières informations d'indication, et les premières informations d'indication indiquent que les premières informations d'ordonnancement doivent être transmises par le dispositif terminal (101, 800).

10. Procédé selon la revendication 8 ou 9, dans lequel les secondes DCI comprennent des secondes informations d'indication, et les secondes informations d'indication indiquent que les premières informations d'ordonnancement sont des informations d'ordonnancement utilisées pour la transmission conjointe cohérente, CJT, ou des informations d'ordonnancement utilisées pour la réception conjointe cohérente, CJR.

11. Procédé selon l'une quelconque des revendications 7 à 10, dans lequel la réception des premières informations d'ordonnancement à partir du dispositif terminal (101, 800) comprend :
la réception d'informations de commande de liaison montante, UCI, à partir du dispositif terminal (101, 800), dans lequel les UCI comprennent les premières informations d'ordonnancement.

12. Procédé selon la revendication 11, dans lequel les UCI sont transportées sur une ressource temps-fréquence de liaison montante, et la ressource temps-fréquence de liaison montante est une ressource temps-fréquence planifiée par le premier dispositif réseau (102, 700) pour le dispositif terminal (101, 800) de manière statique ou semi-statique.

13. Appareil de planification de données (500, 600, 700, 800) pour transmission coordonnée, dans lequel l'appareil (500, 600, 700, 800) comprend un processeur (601), le processeur (601) est couplé à une mémoire (602), la mémoire (602) stocke des instructions, et lorsque les instructions sont exécutées par le processeur (601),
le processeur (601) est activé pour réaliser le procédé selon l'une quelconque des revendications 1 à 6, ou
le processeur (601) est activé pour réaliser le procédé selon l'une quelconque des revendications 7 à 12.

14. Support de stockage lisible par ordinateur, dans lequel le support de stockage lisible par ordinateur est configuré pour stocker un programme informatique, et lorsque le programme informatique est exécuté sur un ordinateur, l'ordinateur est activé pour réaliser le procédé selon l'une quelconque des revendications 1 à 6, ou l'ordinateur est activé pour réaliser le procédé selon l'une quelconque des revendications 7 et 12.

15. Produit de programme informatique, dans lequel le produit de programme informatique comprend un code de programme informatique, et lorsque le code de programme informatique est exécuté, le procédé selon l'une quelconque des revendications 1 à 6 ou le procédé selon l'une quelconque des revendications 7 à 12 est mis en œuvre.
